# EUROPEAN PATENT SPECIFICATION

(11) **EP 2 707 326 B1**
(45) Date of publication and mention of the grant of the patent: **05.04.2017**
(21) Application number: 13736981.5
(22) Date of filing: 24.06.2013
(51) Int. Cl.: C01B 3/38, B01J 8/04, C01B 3/48

(54) **FUEL PROCESSOR**
BRENNSTOFFPROZESSOR
CONVERTISSEUR DE COMBUSTIBLE

(30) Priority: 25.06.2012 JP 2012141972; 25.06.2012 JP 2012141985; 25.06.2012 JP 2012141571
(43) Date of publication of application: 19.03.2014
(73) Proprietor: Panasonic Intellectual Property Management Co., Ltd., Osaka-shi, Osaka 540-6207 (JP)
(72) Inventor: MITA, Yuki, Osaka 540-6207 (JP); MORITA, Masashi, Osaka 540-6207 (JP)
(74) Representative: Schwabe - Sandmair - Marx
(86) International application number: PCT/JP2013/003940
(87) International publication number: WO 2014/002468

(56) References cited:
- WO-A1-2011/151986
- JP-A- 2008 063 193
- US-A1- 2009 133 259

## Description

### Technical Field

The present invention relates to a fuel processor according to claim 1, which produces a hydrogen gas from a raw material gas.

### Background Art

Hitherto, there is known a fuel processor which produces a hydrogen gas from a raw material gas mainly containing a hydrocarbon compound, and which supplies the hydrogen gas to a power generation stack.

Generally, a fuel processor includes an evaporating section, a reforming section, a shift conversion section, and a combusting section. The evaporating section evaporates reforming water so as to mix a raw material gas with water vapor. The reforming section causes the raw material gas mixed with the water vapor to pass through a reforming catalyst so as to be reformed into a hydrogen mixed gas. The shift conversion section causes the hydrogen mixed gas to pass through a shift conversion catalyst so as to remove carbon monoxide therefrom. The combusting section supplies heat to the reforming section so as to maintain the reforming section at a temperature appropriate for a reaction. Heat of an exhaust gas of the combusting section and reaction heat of the shift conversion section are supplied to the evaporating section, and are used to evaporate the reforming water.

As illustrated in PTLs 1 and 2, a fuel processor of the related art employs a configuration in which a combusting section is disposed at the center of the apparatus and a reforming section, an evaporating section, and a shift conversion section respectively surround the combusting section in an annular shape (see PTLs 1 and 2). Since the reforming section, the evaporating section, and the shift conversion section are formed in an annular shape, it is possible to further equalize the temperature distributions of the respective sections compared to a case where these sections are formed in a flat shape.

Further, in the fuel processor of the related art, a spiral channel is generally formed in the annular evaporating section as a channel through which a raw material gas and a reforming gas flow (see PTLs 1 and 2). The spiral channel is formed as a gap between a long inner cylinder and a long outer cylinder that concentrically overlaps the long inner cylinder. Since the channel is formed in a spiral shape, even when the height of the fuel processor is not increased, the channel length may be lengthened and the raw material gas and the water vapor may be sufficiently mixed with each other.

As a technique involved with the invention, PTL 2 discloses a configuration in which a CO removing catalyst layer is formed in an annular shape and a gas flows radially from the center side of the CO removing catalyst layer toward the outer peripheral side thereof (see PTL 2). In the CO removing catalyst layer, a catalyst partition wall is partially inclined so as to prevent a gas short-circuiting path caused by the settling of the catalyst and to reduce the flow velocity of the gas at an inlet side (see PTL 2).

The fuel processor of the related art includes basic members, that is, an inner cylinder which covers a combusting section, a middle cylinder which covers the inner cylinder, and an outer cylinder which covers the middle cylinder (see PTLs 3 to 11). These cylinders are obtained by molding a sheet metal or welding molded sheet metals to each other.

Further, there is proposed a configuration in which a channel cross-sectional area of a channel through which a raw material gas and a reforming gas flow is changed (see PTL 12), wherein an evaporator with a flow path regulation part with a helical shape is used. According to another embodiment of this prior art, an evaporator is revealed in which the cross-sectional area of the flow path on the downstream side is larger than that on the upstream side. Furthermore, a configuration in which a channel of a preheating evaporating section for supplying a raw material gas and a reforming gas to a channel of an evaporating section is inclined (see PTL 13) is known in the art.

In addition, in the fuel processor, a structure may be provided which cools a catalyst reaction section such as a shift conversion section or a selective oxidizing section generating heat. For example, there is disclosed a configuration in which a part of a passage of an oxygen containing gas supplied from the outside approaches a shifting section (corresponding to a shift conversion section) so as to cool the shifting section (see PTL 14). Further, there is disclosed a configuration in which a cooling pipe is provided around a CO shift conversion layer and a CO removing catalyst layer so as to cool these layers (see PTL 15).

### Citation List

### Patent Literature

PTL 1: Japanese Patent Application Laid-Open No. 2003-327407
PTL 2: Japanese Patent No. 4880086
PTL 3: Japanese Patent Application Laid-Open No. 2007-331985
PTL 4: Japanese Patent Application Laid-Open No. 2006-096597
PTL 5: Japanese Patent Application Laid-Open No. 2009-274938
PTL 6: Japanese Patent Application Laid-Open No. 2001-199703
PTL 7: U.S Patent Application Laid-Open No. 2004-0144029
PTL 8: U.S Patent Application Laid-Open No. 2007-0151152
PTL 9: U.S Patent Application Laid-Open No. 2004-0115494
PTL 10: U.S Patent Application Laid-Open No. 2010-0202938
PTL 11: Japanese Patent No. 4918629
PTL 12: Japanese Patent Application Laid-Open No. 2008-063193
PTL 13: Japanese Patent Application Laid-Open No. 2008-019159
PTL 14: Japanese Patent Application Laid-Open No. 2009-209011
PTL 15: Japanese Patent Application Laid-Open No. 2005-193135

### Summary of Invention

### Technical Problem

However, the spiral channel of the evaporating section of the related art has a problem in which the channel may not be easily processed. In the process of manufacturing the evaporating section, the spiral channel is formed in a manner such that the inner cylinder and the outer cylinder concentrically overlap each other, and the outer cylinder is subjected to a pipe contracting process or the inner cylinder is subjected to a pipe expanding process. By this processing, the inner cylinder and the outer cylinder adhere to each other with the channel interposed therebetween. However, such processing is complex, a processing variation easily occurs, and manufacturing cost of the fuel processor increases.

Further, the spiral channel of the evaporating section may be formed by bulging. However, even when this molding method is employed, it is difficult to process the spiral channel of the related art, and the manufacturing cost of the fuel processor increases.

It is an object of the invention to provide a fuel processor manufactured at low cost with a small processing variation and equipped with a spiral channel of an evaporating section.

### Solution to Problem

According to the invention, a fuel processor includes the features set forth in claim 1.

### Advantageous Effects of Invention

Since the fuel processor of the invention includes the spiral channel which extends on the funnel slope surface, the fuel processor may be manufactured without a pipe contracting process or a pipe expanding process. Thus, the spiral channel of the evaporating section may be manufactured at low cost with a small processing variation. Thus, the high-performance fuel processor may be provided at low cost.

### Brief Description of Drawings

[fig.1]FIG. 1 is a longitudinal sectional view illustrating an entire fuel processor of Embodiment 1.
[fig.2]FIG. 2 is a diagram illustrating a flow of a gas in the fuel processor of Embodiment 1.
[fig.3]FIG. 3 is a longitudinal sectional view illustrating a combustion unit of the fuel processor.
[fig.4]FIG. 4 is a longitudinal sectional view illustrating a reforming unit of the fuel processor.
[fig.5]FIG. 5 is a longitudinal sectional view illustrating a shift conversion unit of the fuel processor.
[fig.6]FIG. 6 is a longitudinal sectional view illustrating a desulfurizing unit of the fuel processor.
[fig.7]FIG. 7 is a longitudinal sectional view illustrating a constituting member of the reforming unit.
[fig.8]FIG. 8 is an exploded perspective view of the reforming unit.
[fig.9]FIG. 9 is a perspective view illustrating a corrugated surface of an outer peripheral member.
[fig.10]FIG. 10 is a partially cross-sectional view specifically illustrating a channel of the reforming unit.
[fig.11]FIG. 11 is a partially cross-sectional view illustrating Modified Example 1 of the channel of the reforming unit.
[fig.12]FIG. 12 is a partially cross-sectional view illustrating Modified Example 2 of the channel of the reforming unit.
[fig.13]FIG. 13 is a partially cross-sectional view illustrating Modified Example 3 of the channel of the reforming unit.
[fig.14]FIG. 14 is a partially cross-sectional view illustrating Modified Example 4 of the channel of the reforming unit.
[fig.15]FIG. 15 is a longitudinal sectional view illustrating Modified Example of the fuel processor of Embodiment.
[fig.16]FIGS. 16A and 16B are schematic diagrams illustrating a structure of an evaporating section.
[fig.17]FIG. 17 is an exploded perspective view illustrating a catalyst charging section of a first shift conversion section.
[fig.18]FIGS. 18A, 18B, and 18C are three-side views illustrating the catalyst charging section of the first shift conversion section.
[fig.19]FIG. 19 is a cross-sectional view illustrating a state where the first shift conversion section and the evaporating section are bonded to each other.
[fig.20]FIG. 20 is a graphic chart illustrating a relation between a shape of the catalyst charging section and a heat exchange area.
[fig.21]FIG. 21 is an exploded perspective view illustrating Modified Example of the catalyst charging section of the first shift conversion section.
[fig.22]FIG. 22 is a longitudinal sectional view of a fuel processor of Embodiment 2.
[fig.23]FIG. 23 is a longitudinal sectional view of an inner cylinder of Embodiment 2.
[fig.24]FIG. 24 is a longitudinal sectional view of a middle cylinder of Embodiment 2.
[fig.25]FIG. 25 is a longitudinal sectional view of an outer cylinder of Embodiment 2.
[fig.26]FIG. 26 is a longitudinal sectional view of a combustion cylinder of Embodiment 2.
[fig.27]FIGS. 27A, 27B, and 27C are process diagrams of manufacturing the inner cylinder of Embodiment 2.
[fig.28]FIG. 28 is a flowchart of producing a fuel gas by the fuel processor of Embodiment 2.
[fig.29]FIG. 29 is Modified Example 1 of the fuel processor of Embodiment 2.
[fig.30]FIG. 30 is Modified Example 2 of the fuel processor of Embodiment 2.
[fig.31]FIG. 31 is a longitudinal sectional view of a fuel processor of the related art.

### Description of Embodiments

Hereinafter, Embodiments of the invention will be described in detail with reference to the accompanying drawings.

### 1. Embodiment 1

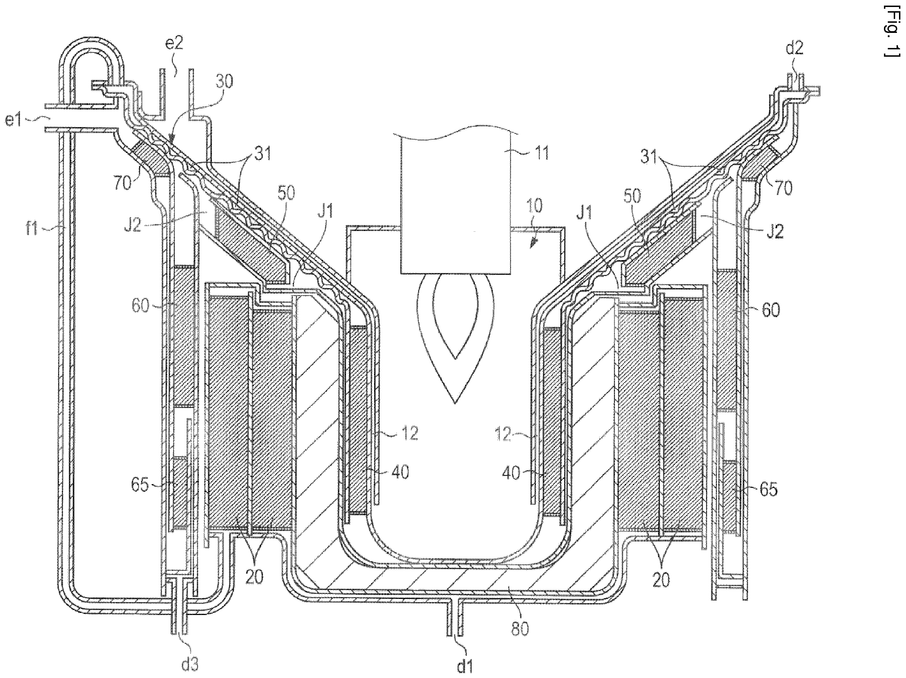

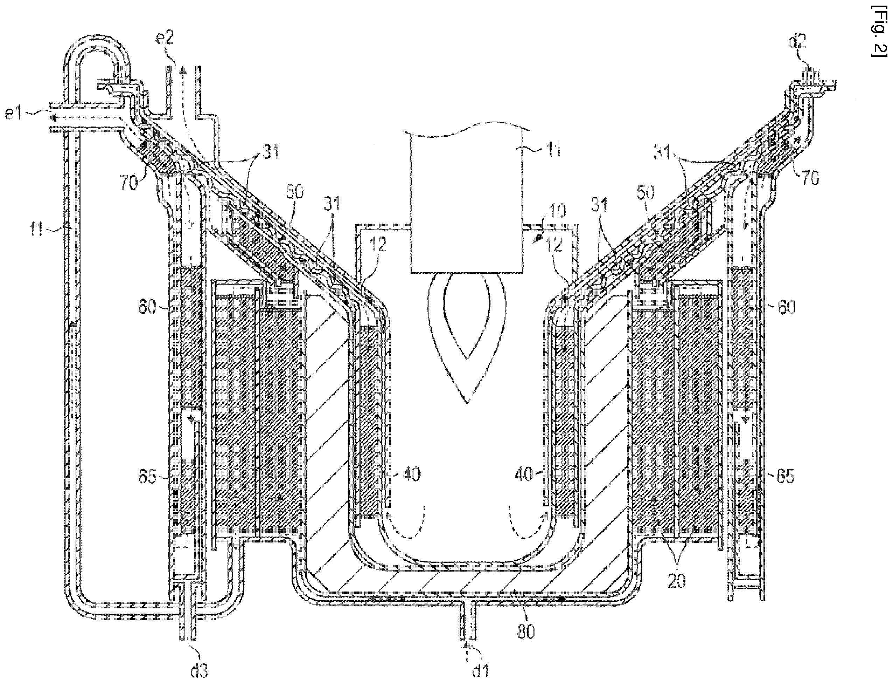

FIG. 1 is a longitudinal sectional view illustrating an entire fuel processor of Embodiment of the invention, and FIG. 2 is a diagram illustrating a flow of a gas in the fuel processor of Embodiment.

The fuel processor of Embodiment is an apparatus which produces a hydrogen gas from a raw material gas and supplies the hydrogen gas to a power generation stack, for example, in a cogeneration system using a fuel cell.

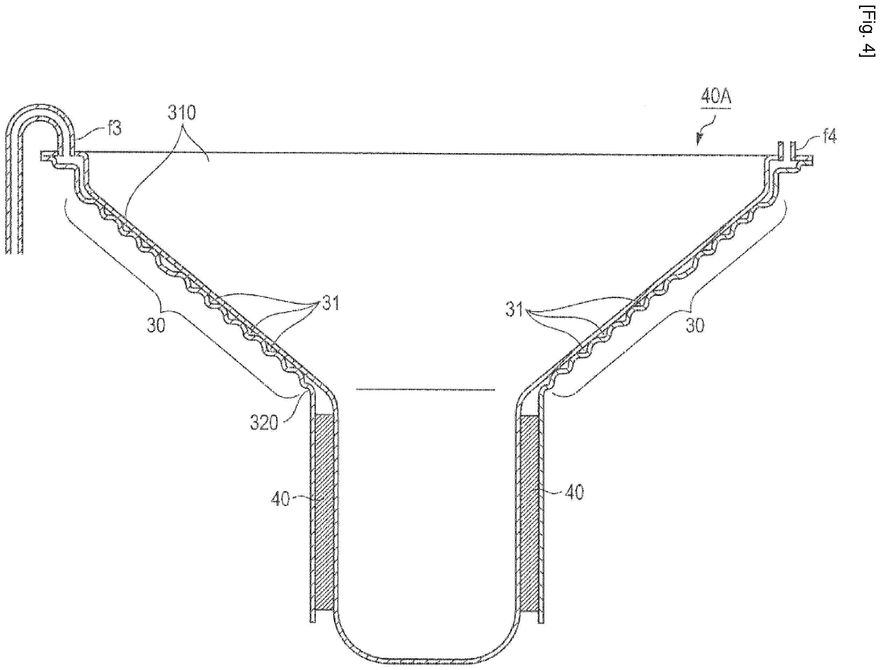

The fuel processor of the invention includes an evaporating section, a reforming section, a shift conversion section, and a combusting section, and may further include other functioning sections. As illustrated in FIG. 1, the fuel processor of Embodiment 1 includes combusting section 10, desulfurizing section 20, evaporating section 30 (see FIG. 4), reforming section 40, first shift conversion section 50, second shift conversion section 60, ammonia decomposing section 65, selective oxidizing section 70, and the like.

### (1) Functions of respective sections

First, the functions of respective sections will be described by referring to FIGS. 1 and 2.

Combusting section 10 is disposed at the center of the apparatus, and supplies heat to reforming section 40 by burning the fuel gas using burner 11. The exhaust gas passes through discharge path 12 so as to be discharged from discharge port e2.

Desulfurizing section 20 removes a sulfur component from a raw material gas such as an urban gas through, for example, hydrodesulfurization by causing the raw material gas to pass through a desulfurizing catalyst. The raw material gas is introduced from introduction port d1, passes through desulfurizing section 20, and is pressure-fed to evaporating section 30.

Evaporating section 30 (see FIG. 4) includes spiral channel 31 which advances to the center while whirling on the funnel-shaped slope surface, and mixes the raw material gas with the water vapor using the raw material gas and the reforming water in heated channel 31. Evaporating section 30 is adjacent to exhaust gas discharge path 12, and channel 31 is heated by the heat of the exhaust gas. The raw material gas is introduced from desulfurizing section 20 through pipe f1. Reforming water flows from introduction port d2.

Reforming section 40 reforms the raw material gas mixed with the water vapor into a hydrogen mixed gas with a reforming catalyst. Reforming section 40 is operated at a high temperature, for example, 600 degrees C. Heat insulating material 80 for decreasing the amount of exhaust heat toward the periphery thereof is provided around reforming section 40 and below combusting section 10. The reformed hydrogen mixed gas is sent to first shift conversion section 50.

The shift conversion section removes carbon monoxide contained in the hydrogen mixed gas from the hydrogen mixed gas. The shift conversion section includes first shift conversion section 50 and second shift conversion section 60.

First shift conversion section 50 removes carbon monoxide contained in the hydrogen mixed gas by causing the hydrogen mixed gas to pass through the first shift conversion catalyst. First shift conversion section 50 is operated at a high temperature, for example, 300 degrees C. The reaction with the hydrogen mixed gas in first shift conversion section 50 is an exothermal reaction. First shift conversion section 50 is adjacent to evaporating section 30, and the heat generated by first shift conversion section 50 is supplied to evaporating section 30 and is used to heat channel 31. The hydrogen mixed gas which passes through first shift conversion section 50 is sent to second shift conversion section 60.

Second shift conversion section 60 further decreases the concentration of the carbon monoxide of the hydrogen mixed gas by causing the hydrogen mixed gas to pass through a second shift conversion catalyst. Second shift conversion section 60 is operated at a low temperature, for example, 200 degrees C lower than of first shift conversion section 50. The reaction of the hydrogen mixed gas in second shift conversion section 60 is an exothermal reaction. The hydrogen mixed gas which passes through second shift conversion section 60 is sent to ammonia decomposing section 65.

Ammonia decomposing section 65 removes ammonia contained in the hydrogen mixed gas by causing the hydrogen mixed gas to pass through an NH₃ decomposing catalyst. The hydrogen mixed gas from which ammonia is removed is sent to selective oxidizing section 70. In ammonia decomposing section 65, little air is introduced from introduction port d3 so as to cause a catalyst reaction.

Selective oxidizing section 70 decreases the concentration of the carbon monoxide contained in the hydrogen mixed gas to 10 ppm or so by causing the hydrogen mixed gas to pass through a selective oxidizing catalyst. This gas is a hydrogen gas to be supplied to a power generation stack. The reaction of the hydrogen mixed gas in selective oxidizing section 70 is an exothermal reaction. Selective oxidizing section 70 is adjacent to evaporating section 30, and the heat generated by selective oxidizing section 70 is supplied to evaporating section 30 and is used to heat channel 31. The hydrogen gas is supplied from outlet port e1 toward the power generation stack.

### (2) Structures of respective sections

Next, the outline of the structures of the respective sections will be described.

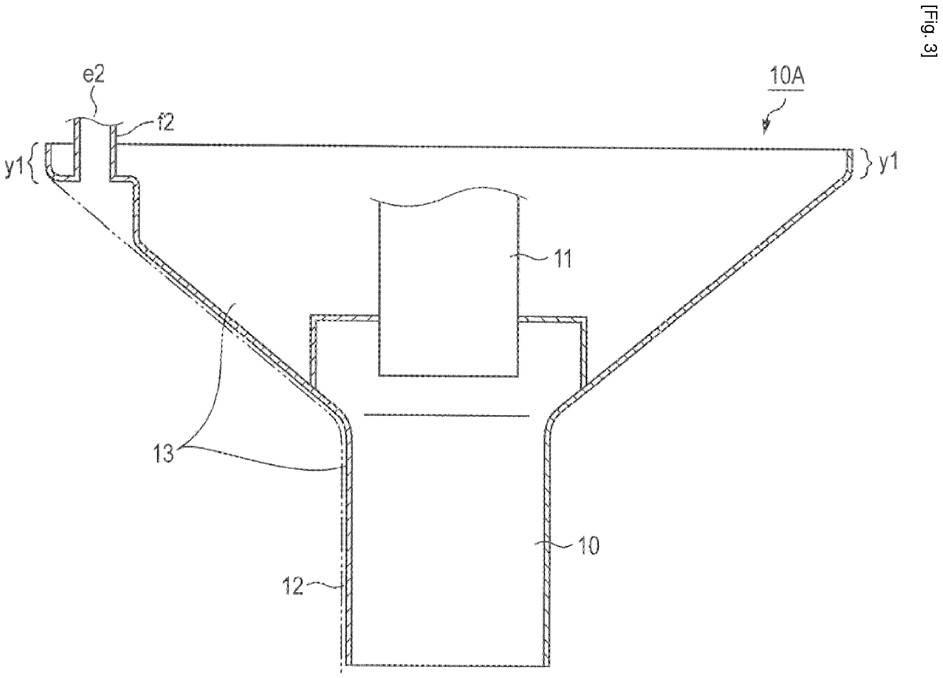

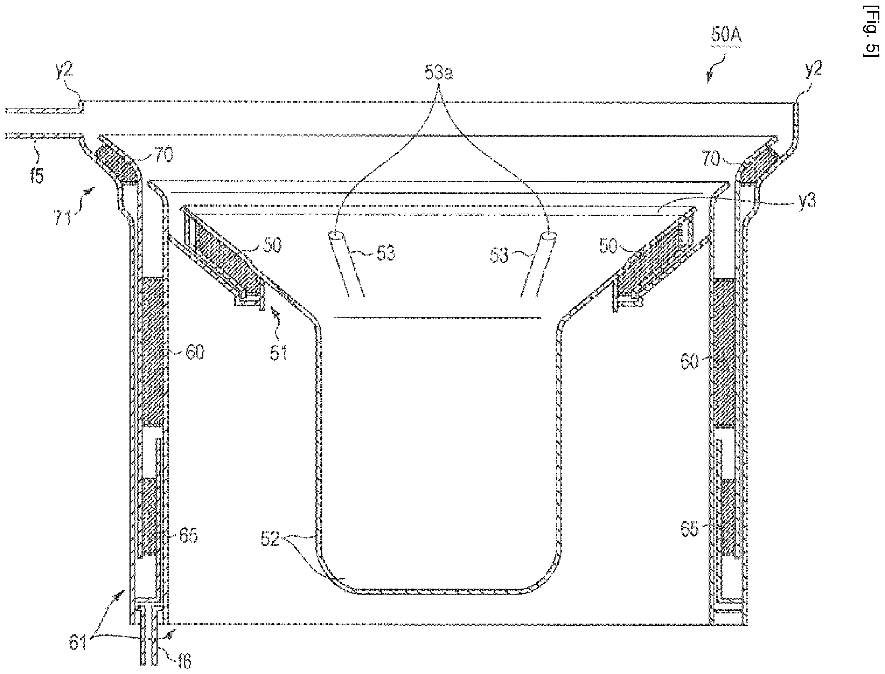

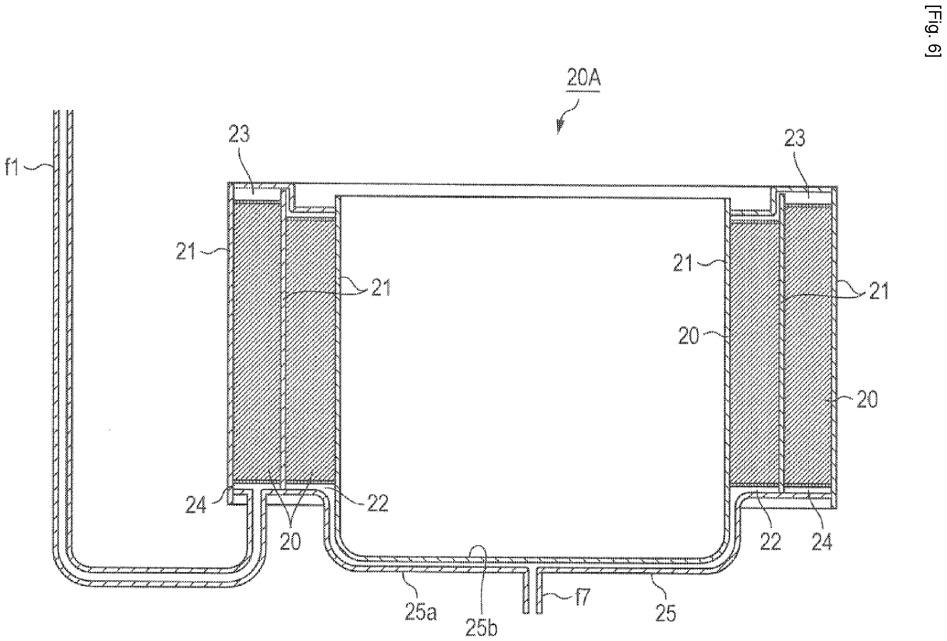

As illustrated in FIGS. 3 to 6, the fuel processor of Embodiment 1 may be divided into a plurality of units in the manufacturing process, and the respective units are bonded to one another by welding or the like. The respective units include fuel unit 10A (FIG. 3), reforming unit 40A (FIG. 4), shift conversion unit 50A (FIG. 5), and desulfurizing unit 20A (FIG. 6).

FIG. 3 is a longitudinal sectional view of combustion unit 10A of the fuel processor, FIG. 4 is a longitudinal sectional view of reforming unit 40A of the fuel processor, FIG. 5 is a longitudinal sectional view of shift conversion unit 50A of the fuel processor, and FIG. 6 is a longitudinal sectional view of desulfurizing unit 20A of the fuel processor.

### (2-1) Combustion unit

As illustrated in FIG. 3, combustion unit 10A includes burner 11, combusting section 10 which performs a combustion using burner 11, wall member 13 which defines one side of exhaust gas discharge path 12, and pipe f2 which connects discharge port e2 to discharge path 12.

Wall member 13 is formed in an annular shape about burner 11 and combusting section 10 so as to surround them. In wall member 13, the periphery of combusting section 10 is formed in a cylindrical shape, and a portion adjacent to evaporating section 30 (see FIG. 1) is formed in a conical slope surface shape.

In combustion unit 10A, for example, outer peripheral portion y1 is bonded to a place corresponding to reforming unit 40A by welding or the like. Alternatively, as in combustion cylinder 450 of the fuel processor of Embodiment 2, the combustion unit may be manufactured by pressing a sheet metal without the entire welded circumference portion.

### (2-2) Reforming unit

As illustrated in FIG. 4, reforming unit 40A is a unit which includes evaporating section 30 and reforming section 40. Reforming unit 40A is provided with inner peripheral member (corresponding to a first member) 310 and outer peripheral member (corresponding to a second member) 320 which form the spaces of channel 31 and reforming section 40 by the gap between the first and second members, and provided with pipes f3 and f4 into which the raw material gas and the reforming water are introduced.

Although it will be described later in detail, inner peripheral member 310 is formed in a container shape (a bottomed container) which surrounds combustion unit 10A and covers the lower side of combustion unit 10A (the flame contacting side). Although it will be described later in detail, outer peripheral member 320 is formed in an annular shape which surrounds inner peripheral member 310 and of which the upper and lower sides are opened.

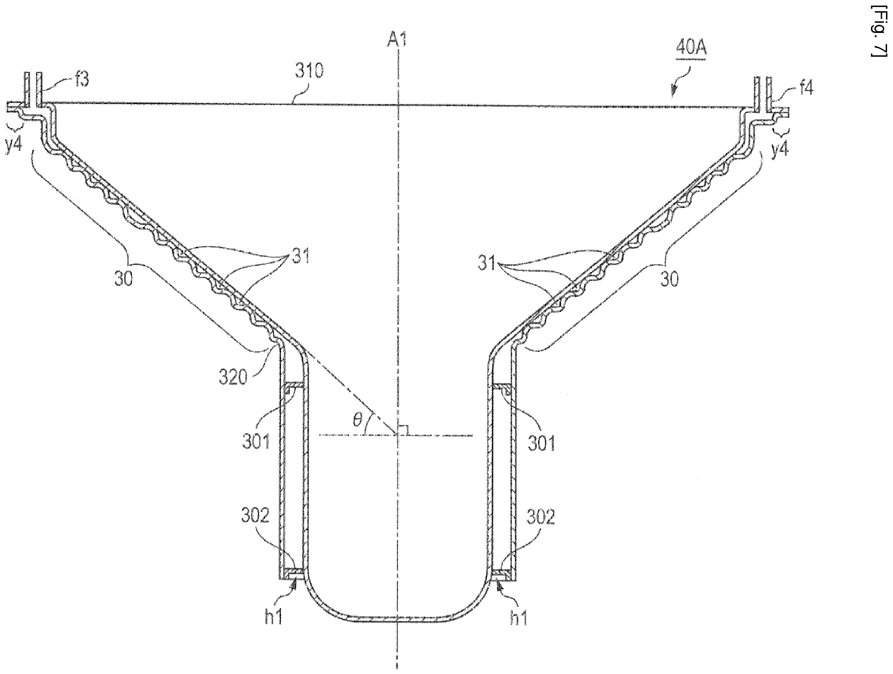

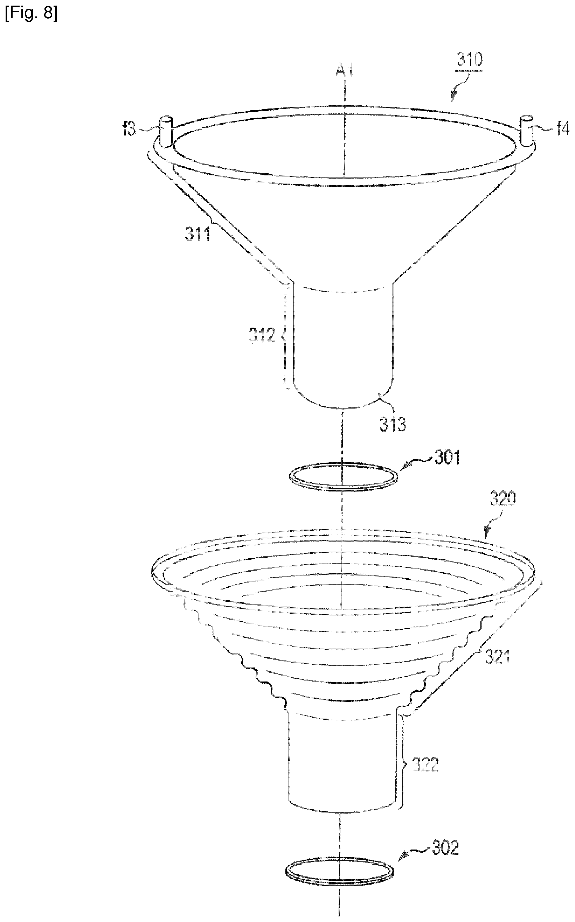

The structure of reforming unit 40A will be described in more detail. FIG. 7 is a longitudinal sectional view illustrating a constituting member of reforming unit 40A. FIG. 8 is an exploded perspective view of reforming unit 40A. FIGS. 7 and 8 illustrate a configuration in which the reforming catalyst is removed from reforming unit 40A.

Reforming unit 40A includes outer peripheral member 320, inner peripheral member 310, upper and lower covers 301 and 302 which define the catalyst storage space, and a reforming catalyst (which is not illustrated in FIGS. 7 and 8).

It is desirable to integrally mold inner peripheral member 310 except for the portions of pipes f3 and f4 through metal pressing. Inner peripheral member 310 is a container-shaped member of which one end side (the upper side in FIG. 8) is opened and the other end side (the lower side in FIG. 8) is blocked, and inclination portion 311, inner cylinder portion (corresponding to an inner cylinder) 312, and bottom portion 313 (see FIG. 8) are continuously formed from the opening.

Inclination portion 311 is formed in a conical slope surface shape of which the diameter decreases as it goes from the opening side toward the other end side. Inner cylinder portion 312 is formed in a cylindrical shape of which the diameter is substantially even from the opening side toward the bottom side. Bottom portion 313 blocks the bottom side of inner cylinder portion 312. The boundary between inner cylinder portion 312 and bottom portion 313 is formed as a curved surface with a comparatively large curvature. Inclination portion 311, inner cylinder portion 312, and bottom portion 313 are formed in a substantially axisymmetrical shape (a symmetrical shape about the axis), and the center axes (A1) thereof are formed so as to overlap one line.

The inclination angle X (the inclination angle X with respect to the horizontal plane and the inclination angle with respect to center axis A1 are "(90 - X) degrees ") of inclination portion 311 is approximately 40 degrees. The inclination angle X may be desirably 15 degrees to 75 degrees and more desirably 30 degrees to 50 degrees. When the inclination angle X is set to 75 degrees or less, channel 31 of evaporating section 30 may be formed without a pipe expanding process or a pipe contracting process. Then, when the inclination angle X is set to 15 degrees or more, channel 31 of evaporating section 30 may be provided with an appropriate channel through which the reforming water flows down in the gravity direction. In addition, when the inclination angle X is set to 30 degrees to 50 degrees, it is easy to mold the corrugated surface of outer peripheral member 320 as the partition of channel 31 of evaporating section 30. Further, it is possible to ensure an appropriate angle as a channel slope on which the reforming water flows down.

It is desirable to integrally mold outer peripheral member 320 by metal pressing. Outer peripheral member 320 is a tubular member of which one end side (the upper side in FIG. 8) and the other end side (the lower side in FIG. 8) are opened, and inclination portion 321 and outer cylinder portion (corresponding to the outer cylinder) 322 (see FIG. 8) are continuously formed from one opening side toward the other opening side.

Inclination portion 321 has a configuration in which a conical slope surface is provided with an corrugated surface. The inclination angle of inclination portion 321 is equal to the inclination angle of inclination portion 311 of inner peripheral member 310.

Outer cylinder portion 322 is formed in a cylindrical shape of which the diameter is substantially even from one opening side toward the other opening side. The inner diameter of outer cylinder portion 322 is larger than the outer diameter of inner cylinder portion 312 of outer peripheral member 320, and the reforming catalyst storage space is arranged in a gap between outer cylinder portion 322 and inner cylinder portion 312.

Inclination portion 321 and outer cylinder portion 322 are substantially formed in an axisymmetrical shape when the corrugated surface is not taken into consideration, and the center axes (A1) are formed so as to overlap one line.

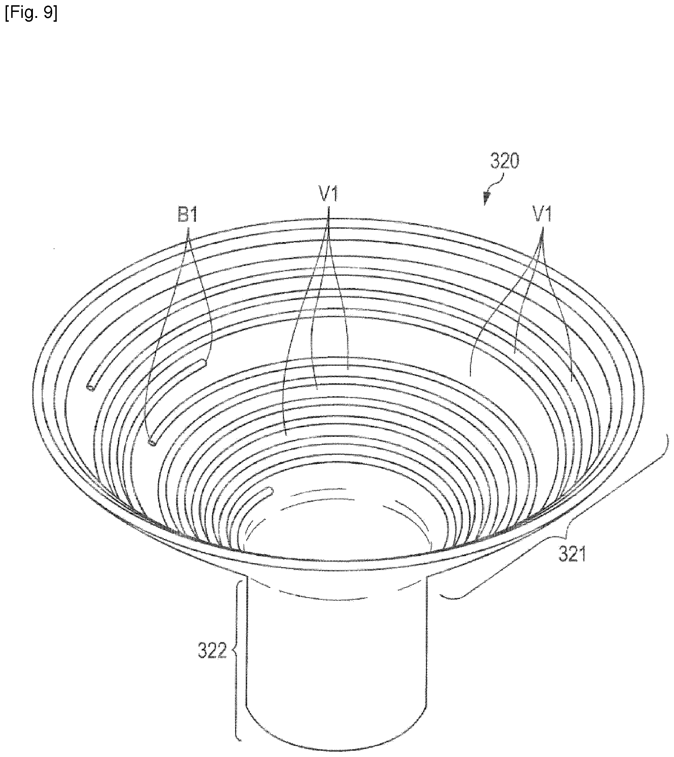

FIG. 9 is a perspective view illustrating the corrugated surface of outer peripheral member 320.

As illustrated in FIG. 9, the corrugated surface of inclination portion 321 is formed so that recessed groove V1 extends in a spiral shape. Recessed groove V1 is a spiral groove which advances while whirling from the peripheral edge side of inclination portion 321 toward the center thereof, and is provided so that the center axis of the spiral shape substantially overlaps the center axes of inclination portion 321 and outer cylinder portion 322. Recessed groove V1 is continuously formed from the opening side of inclination portion 321 to the front side of outer cylinder portion 322.

Recessed groove V1 is formed so that a continuous spiral convex portion is interposed between the recessed grooves. The spiral convex portion includes spiral convex end B1 in the middle of inclination portion 321. By providing end B1, a slope surface portion without an corrugated portion in the entire circumference may be formed at a predetermined position of inclination portion 321, and recessed groove V1 may extend continuously without being interrupted at the halfway position. It is desirable that bonding portion y3 of shift conversion unit 50A come into close contact with the slope surface portion without the corrugated portion.

Upper cover 301 and lower cover 302 (see FIG. 8) are annular covers each having a size in which the inner peripheral portion adheres to inner cylinder portion 312 and the outer peripheral portion adheres to the inside of outer cylinder portion 322. Each of upper cover 301 and lower cover 302 is provided with a mesh through which a gas passes, but the mesh is formed in a size through which the catalyst does not pass.

### (2-3) Shift conversion unit

As illustrated in FIG. 5, shift conversion unit 50A is a unit which includes first shift conversion section 50, second shift conversion section 60, ammonia decomposing section 65, and selective oxidizing section 70.

Shift conversion unit 50A includes partition 52 which covers one side of the gas channel from reforming section 40 to first shift conversion section 50, and first constituting member 51 which forms the catalyst container of first shift conversion section 50 and the gas channel therearound.

Further, shift conversion unit 50A includes second constituting member 61 which forms the catalyst containers of second shift conversion section 60 and ammonia decomposing section 65 and the gas channel therearound, and third constituting member 71 which forms the catalyst container of selective oxidizing section 70.

Partition 52 is formed in a container shape which surrounds reforming section 40 in an annular shape and of which the upper side is opened and the lower side is blocked. Partition 52 is provided with plural grooves 53 and plural openings 53a for sending the gas flowing on the inside (the center side) of partition 52 toward the upstream side of first shift conversion section 50 disposed at the outside of partition 52.

First to third constituting members 51, 61, and 71 respectively have annular structures, and the cross-sections thereof illustrated in FIG. 5 are substantially connected in the circumferential direction. Further, first to third constituting members 51,61, and 71 are concentrically arranged about combusting section 10. Second constituting member 61 is connected with pipe f6 for introducing air to a part of the circumferential direction, and third constituting member 71 is connected with pipe f5 for sending a hydrogen gas to a part of the circumferential direction.

Outer peripheral portion y2 of the upper end of shift conversion unit 50A is bonded to reforming unit 40A by welding or the like.

### (2-4) Desulfurizing unit

As illustrated in FIG. 6, desulfurizing unit 20A is a unit which includes desulfurizing section 20 and raw material gas introduction channel 25. In desulfurizing unit 20A, catalyst container 21 of desulfurizing section 20 and gas channels 22 to 24 therearound are formed in an annular shape, channels 22 to 24 extending in the circumferential direction as shown in FIG. 6. A part of gas channel 24 in the circumferential direction is connected with pipe f1 for sending out a desulfurized gas.

Further, two bottom plates 25a and 25b are provided at the center bottom side of desulfurizing unit 20A. Introduction channel 25 is arranged in a gap between two bottom plates 25a and 25b. It is desirable to integrally mold bottom plates 25a and 25b with the members constituting gas channels 22 to 24 of desulfurizing section 20. Introduction channel 25 is a channel which is constituted by the planar gap between double bottom plates 25a and 25b, and the center thereof is connected with pipe f7.

Desulfurizing unit 20A is fitted and fixed to the gap of shift conversion unit 50A while interposing heat insulating material 80 (see FIG. 1).

### (3) Channel structure of reforming unit and assembling procedure

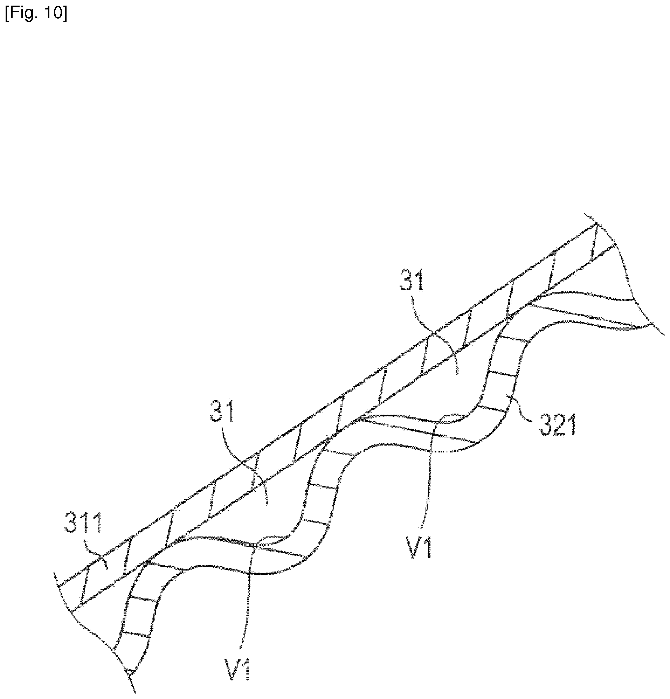

FIG. 10 is a partially cross-sectional view specifically illustrating spiral channel 31 of reforming unit 40A.

As for the assembly of reforming unit 40A, first, as illustrated in FIG. 8, inner peripheral member 310 and outer peripheral member 320 concentrically overlap each other. At this time, as illustrated in FIG. 10, the outer surface of inclination portion 311 of inner peripheral member 310 adheres to the inner corrugated surface of inclination portion 321 of outer peripheral member 320, and spiral channel 31 is formed by the gap therebetween. Channel 31 extends in a spiral shape from the outer peripheral side of inclination portion 321 toward the center along recessed groove V1 of inclination portion 321.

Further, at this time, upper cover 301 is fixed between inner cylinder portion 312 and outer cylinder portion 322.

Next, inner peripheral member 310 and outer peripheral portion y4 (see FIG. 7) of outer peripheral member 320 are bonded to each other while inclination portion 311 of inner peripheral member 310 adheres to the convex portion of inclination portion 321 of outer peripheral member 320. The bonding is performed by, for example, brazing or welding. Since outer peripheral portion y4 is a portion which is not heated during the operation of the fuel processor, the bonding can be brazing.

The bonding of outer peripheral portion y4 is performed while inclination portion 311 of inner peripheral member 310 and inclination portion 321 of outer peripheral member 320 are pressed against each other so as to come into close contact with each other. For this reason, outer peripheral portion y4 may be bonded without making a short-circuit path (a gap or the like) which causes adjacent channels 31 of evaporating section 30 to be communicated with each other.

In the bonding of outer peripheral portion y4, the convex portion of inclination portion 321 and the outer surface of inclination portion 311 may be brazed to each other throughout the entire path of the convex portion of inclination portion 321. With such brazing, it is possible to further reliably prevent a short-circuiting path between adjacent channels 31 of evaporating section 30.

After inner peripheral member 310 is bonded to outer peripheral member 320, the gap (the catalyst storage space) between inner cylinder portion 312 and outer cylinder portion 322 is opened at the bottom side, and the opening is formed in an annular shape as catalyst input port h1. In the subsequent process, the reforming catalyst is charged into the catalyst storage space through input port h1. Subsequently, lower cover 302 is fixed, and thus the assembly of reforming unit 40A is completed.

As described above, according to the fuel processor of Embodiment 1, spiral channel 31 of evaporating section 30 may be easily formed without a pipe contracting process or a pipe expanding process. Further, the structure of channel 31 may be controlled with high precision by the pressing of outer peripheral member 320, and hence the shape and the position of channel 31 may be easily adjusted according to the design. Thus, spiral channel 31 with a small processing variation is formed. For this reason, the raw material gas and the water vapor may be sufficiently mixed with each other, and hence the high-performance fuel processor may be manufactured at low cost.

In addition, according to the fuel processor of Embodiment 1, the channel of evaporating section 30 is formed in a manner such that inner peripheral member 310 integrally molded with inclination portion 311 and outer peripheral member 320 integrally molded with inclination portion 321 overlap each other. Thus, the durability of evaporating section 30 may be improved.

In addition, according to the fuel processor of Embodiment 1, evaporating section 30 is formed on a conical slope surface. Thus, when the channel of evaporating section 30 is lengthened, the fuel processor does not easily increase in length in the height direction (the direction taken along axis A1 (see FIG. 7)) compared to a case where the evaporating section is formed on a right cylindrical side surface. That is, a ratio between the dimension of the fuel processor in the height direction and the dimension thereof in the width direction is hard to increase. In other words, when the fuel processor is largely designed in the radial direction, the channel of evaporating section 30 may be increased in length. Thus, the installation safety of the fuel processor increases and a degree of freedom in the process is improved during the installation.

### (4) Modified Example of channel

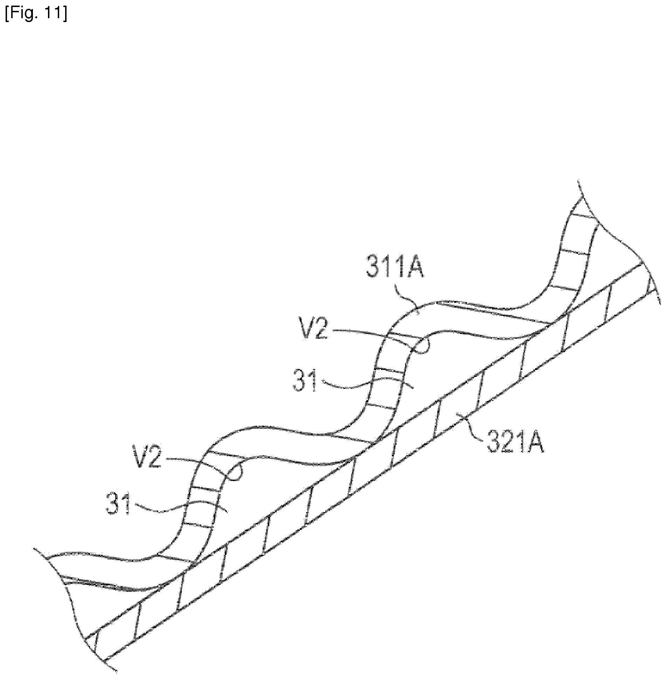

FIGS. 11 to 14 are respectively partially cross-sectional views illustrating Modified Example 1 to Modified Example 4 of the channel of reforming unit 40A.

Channel 31 of evaporating section 30 may be modified by modifying the planar shapes of inclination portion 311 of inner peripheral member 310 and inclination portion 321 of outer peripheral member 320 of reforming unit 40A.

In Modified Example 1 illustrated in FIG. 11, inclination portion 311A of inner peripheral member 310 is provided with an corrugated surface, and inclination portion 321A of outer peripheral member 320 is formed as a slope surface without an corrugated portion. The corrugated surface is provided with spiral recessed groove V2.

With such a configuration, the outer peripheral surface of evaporating section 30 is not provided with the corrugated portion. For this reason, in a case where a heat generating member adheres to the outer peripheral surface, this adhering may be easily performed.

In the configuration of Modified Example 1, when the reforming water flows down according to the gravity, the reforming water contacts the contact portion between inclination portion 311A and inclination portion 321A. Thus, in the configuration of Modified Example 1, it is desirable to bond the entire path of the convex portion of inclination portion 311A to inclination portion 321A by brazing or the like.

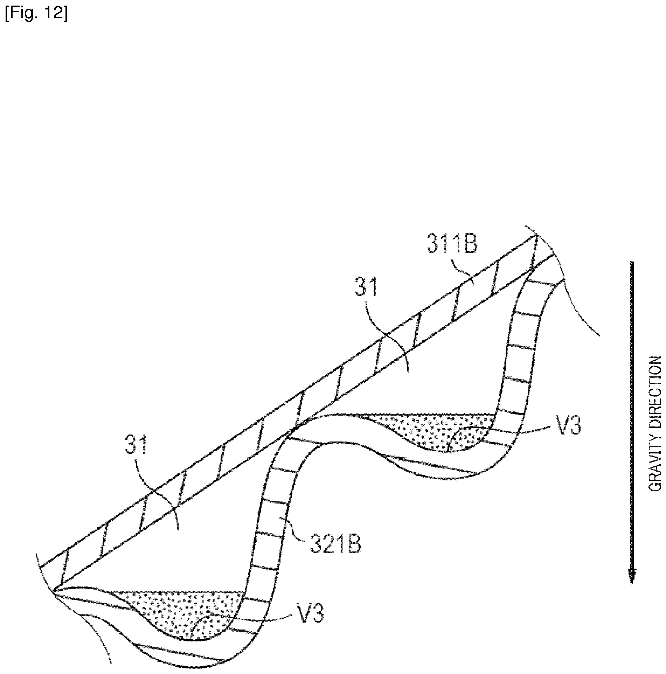

Modified Example 2 illustrated in FIG. 12 is an example in which the groove depth of recessed groove V3 formed in inclination portion 321B of outer peripheral member 320 is large. Further, in the longitudinal section of recessed groove V3, both ends of recessed groove V3 are disposed so as to be higher than the center side of recessed groove V3 in the gravity direction.

Inclination portion 311B of inner peripheral member 310 is the same as inclination portion 311 of Embodiment.

In the configuration of Modified Example 2, when the reforming water flows down according to the gravity, the reforming water flows down through channel 31 along the lowermost end of the longitudinal section of recessed groove V3, and hence the reforming water is hard to contact the contact portion between inclination portion 311B and inclination portion 321B. Thus, in the configuration of Modified Example 2, the reforming water may flow along channel 31 without short-circuiting channel 31 even when the convex portion of inclination portion 321B and the slope surface of inclination portion 311B are not brazed to each other throughout the entire path.

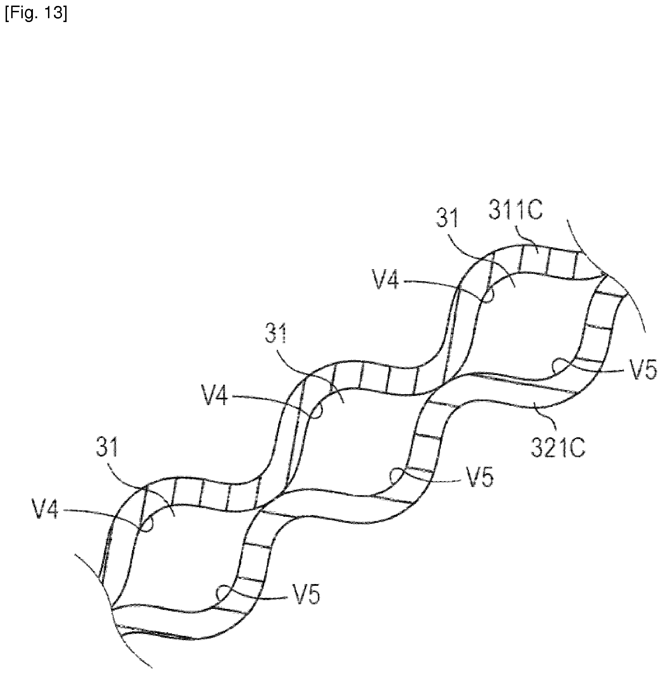

Modified Example 3 illustrated in FIG. 13 is an example in which inclination portion 311C and inclination portion 321C are respectively provided with recessed grooves (corresponding to the first and second recessed grooves) V4 and V5 which advance in a spiral shape. Two recessed grooves V4 and V5 are formed so as to advance in a spiral shape along the same path. When inclination portion 311C and inclination portion 321C concentrically overlap each other, recessed grooves V4 and V5 are disposed so as to face each other as a mate. That is, streaky convex portions which constitute recessed grooves V4 and V5 are disposed so as to contact each other in the entire path of channel 31.

According to the configuration of Modified Example 3, the cross-sectional area of channel 31 may be increased without increasing the undulation of the corrugated surface. Thus, in the configuration of Modified Example 3, it is possible to reduce a pressure loss in the gas or the liquid that flows along channel 31 while evenly maintaining the area of evaporating section 30 and the path length of channel 31. For this reason, the raw material gas and the reforming water may flow in channel 31 at a comparatively low pressure.

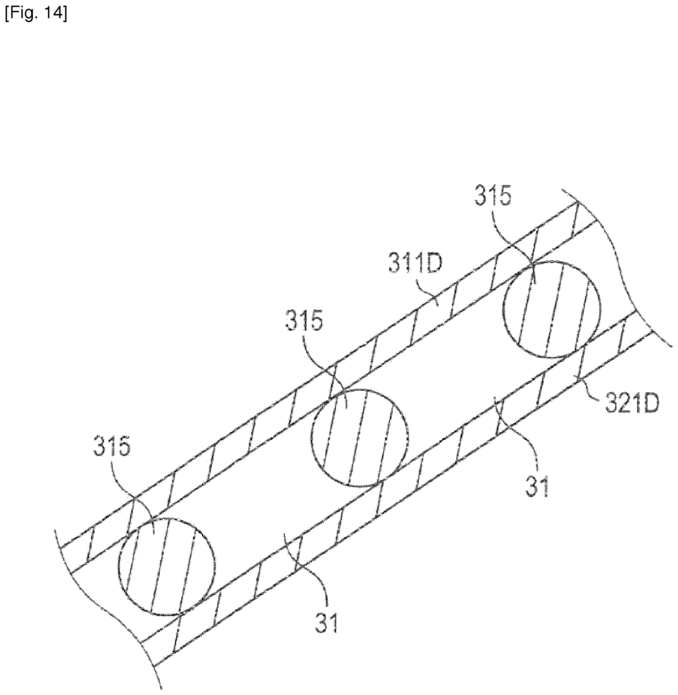

Modified Example 4 illustrated in FIG. 14 is an example in which spiral partition rod 315 is interposed between inclination portion 311D and inclination portion 321D. Partition rod 315 is a rod-shaped member which is formed in a spiral shape on a conical slope surface. Partition rod 315 may be bonded to inclination portion 311D and inclination portion 321D by brazing or the like, and may pressure-adhere to inclination portion 311D and inclination portion 321D by a predetermined pressure or more.

According to the configuration of Modified Example 4, spiral channel 31 is configured by the space which is arranged between inclination portion 311D and inclination portion 321D and is defined by partition rod 315.

As described above, even in the configurations of Modified Example 1 to Modified Example 4, spiral channel 31 of evaporating section 30 may be easily and precisely formed without a pipe contracting process or a pipe expanding process.

### (5) Modified Example of fuel processor

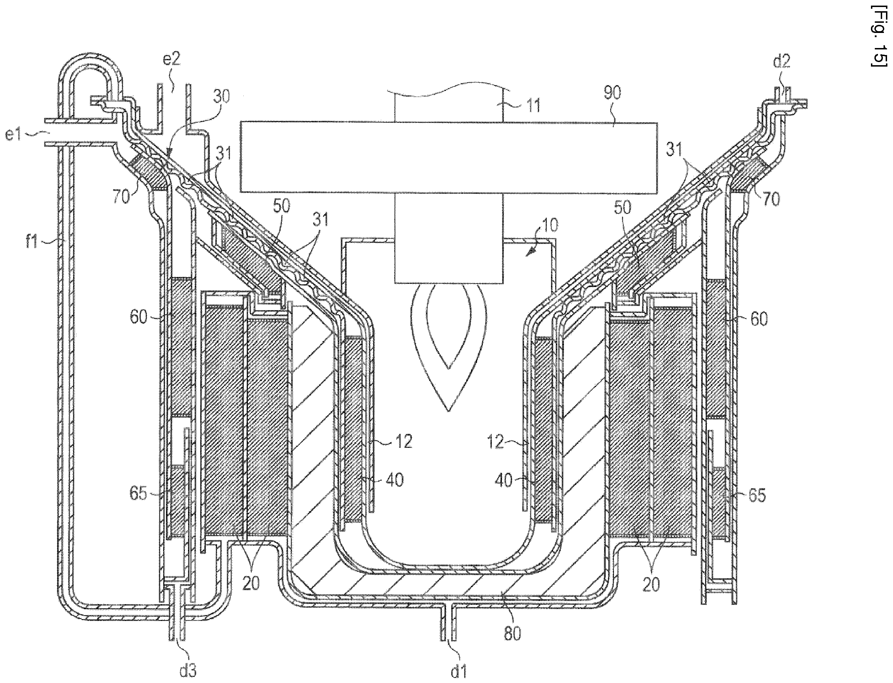

FIG. 15 is a longitudinal sectional view illustrating Modified Example of the fuel processor of Embodiment 1.

The fuel processor of Modified Example has the same configuration as that of Embodiment of FIG. 1 except that reforming water tank 90 is provided. The same constituents as those of FIG. 1 are denoted by the same reference numerals, and the description thereof will not be repeated.

The fuel processor of Modified Example includes reforming water tank (corresponding to the reforming water supply tank) 90 which stores the reforming water supplied to evaporating section 30 in a surrounded region in the funnel slope surface portion of evaporating section 30. A comparatively large space is present in the surrounded region of the funnel slope surface portion, and is heated by the exhaust heat of combusting section 10. Thus, the reforming water may be preheated by disposing reforming water tank 90 at this space.

According to Modified Example, since the reforming water flowing into evaporating section 30 is preheated, the reforming water rapidly evaporates in channel 31 of evaporating section 30, and hence the raw material gas and the water vapor may be sufficiently mixed with each other.

### (6) Relation between first shift conversion section and evaporating section

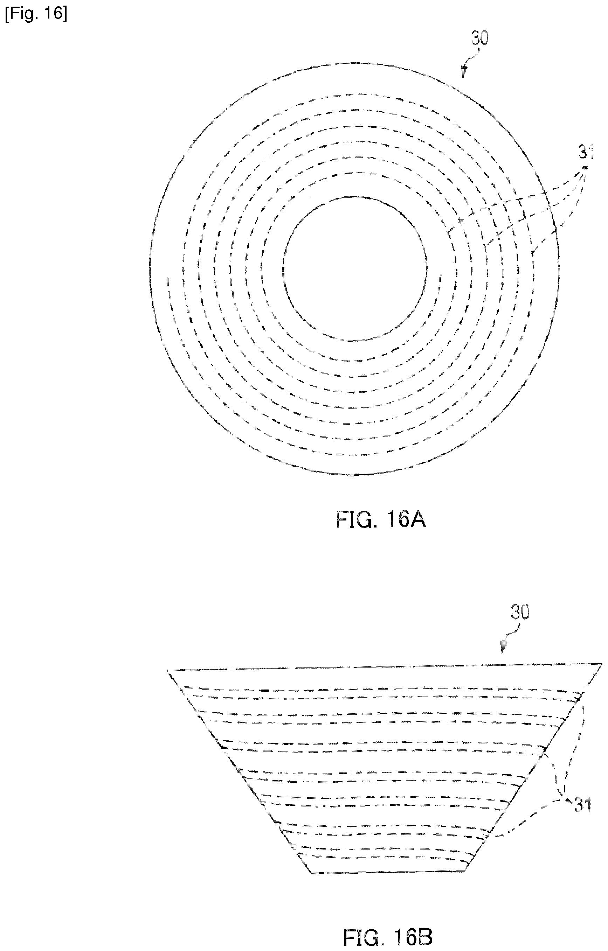

First shift conversion section 50 and evaporating section 30 are configured to exchange heat therebetween. FIGS. 16A and 16B are respectively a schematic plan view and a schematic side view illustrating the structure of the evaporating section.

As illustrated in FIGS. 16A and 16B, evaporating section 30 is formed in a funnel slope surface shape in which the opening diameter decreases as it goes down in the gravity direction. Then, evaporating section 30 is provided with spiral channel 31 which advances toward the center while whirling on the funnel slope surface.

The slope surface of evaporating section 30 is not limited to the conical slope surface illustrated in FIGS. 16A and 16B. The slope surface of evaporating section 30 may be a slope surface in which the opening diameter decreases in the gravity direction. For example, the inclination angle may be changed halfway or the cross-sectional surface may be asymmetric (oval or the like) in the rotation direction.

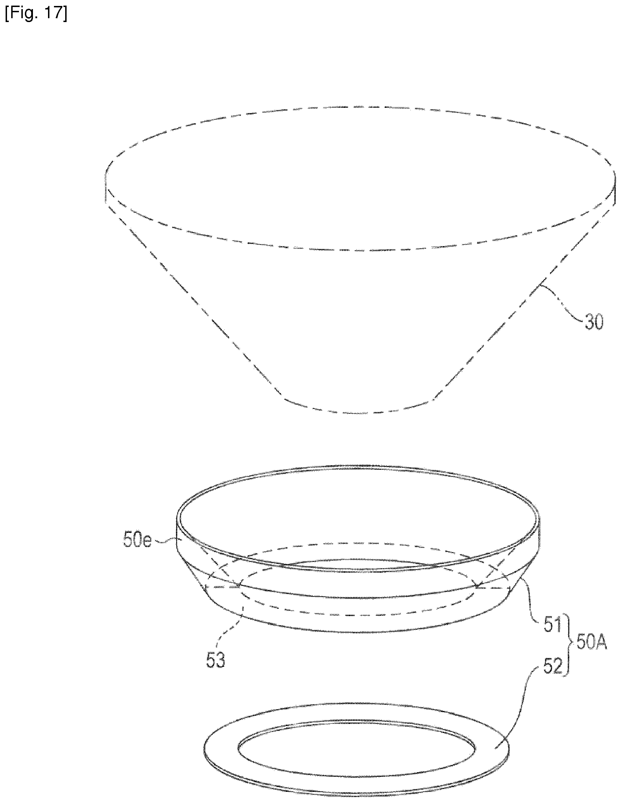

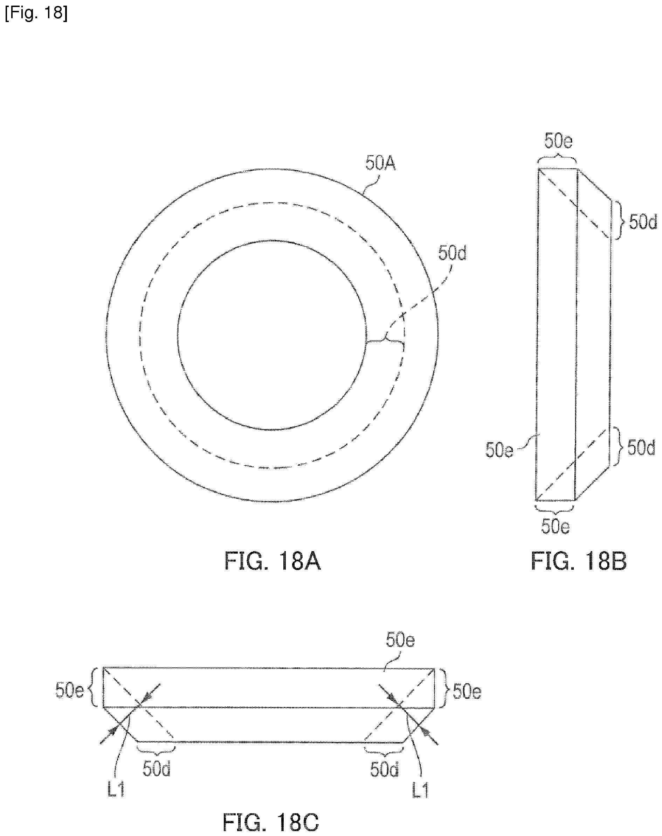

FIG. 17 is an exploded perspective view illustrating the catalyst charging section of first shift conversion section 50; and FIGS. 18A, 18B, and 18C are three-side views of the catalyst charging section of first shift conversion section 50 (FIG. 18A: plan view, FIG. 18B: first side view, and FIG. 18C: second front view).

First shift conversion section 50 is configured such that catalyst charging section 50A illustrated in FIG. 17 is arranged between upstream channel J1 (see FIG. 1) and downstream channel J2 (see FIG. 1) for the hydrogen mixed gas.

Catalyst charging section 50A is configured by an annular region which is disposed on the slope surface of evaporating section 30 and which surrounds evaporating section 30. As illustrated in FIG. 18C, thickness L1 in a direction perpendicular to the slope surface of catalyst charging section 50A is set to be substantially even. Here, the thicknesses of the portions near gas inflow surface 50d and gas delivery surface 50e are not even.

As illustrated in FIG. 17, catalyst charging section 50A includes metallic storage casing 51 of which the bottom side is opened and cover 52 which blocks the bottom side opening of storage casing 51. The bottom side opening of storage casing 51 is input port 53 through which the catalyst is input in the apparatus manufacturing process. In the manufacturing process, the catalyst is input to first shift conversion section 50 through input port 53, so that the catalyst is charged therein. Subsequently, cover 52 is bonded to input port 53. Cover 52 is formed in a mesh shape which interrupts the passage of the catalyst, but allows the passage of the gas.

Cover 52 is an annular member which is bonded to the entire circumference of storage casing 51, and blocks input port 53 of storage casing 51 along the substantially horizontal plane (a plane perpendicular to the gravity direction). Even when the charging space is filled with the catalyst, cover 52 may easily block input port 53 along the horizontal plane.

A gas flows in catalyst charging section 50A. The gas flows along the slope surface of evaporating section 30, and is directed from the funnel slope surface with a small opening diameter toward the funnel slope surface with a large opening diameter. That is, the lower end surface (the surface of cover 52) of catalyst charging section 50A in the gravity direction is gas inflow surface 50d, and the upper outer peripheral side surface is gas delivery surface 50e.

Gas inflow surface 50d is a substantially horizontal surface, and gas delivery surface 50e is a substantially vertical surface. Gas inflow surface 50d and gas delivery surface 50e are formed in a mesh shape which interrupts the leakage of the catalyst, but allows the passage of the gas. Gas inflow surface 50d faces upstream gas channel J1 (see FIG. 1) connected to reforming section 40. Meanwhile, gas delivery surface 50e faces downstream gas channel J2 (see FIG. 1) connected to second shift conversion section 60. Each of upstream gas channel J1, gas inflow surface 50d, catalyst charging section 50A, gas delivery surface 50e, and downstream gas channel J2 is formed in an annular shape along the circumferential direction of evaporating section 30.

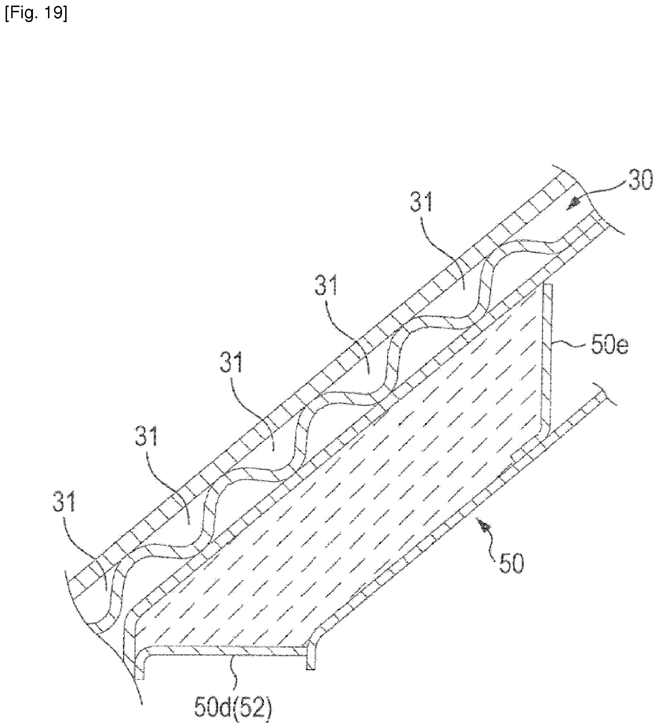

FIG. 19 is a cross-sectional view illustrating a state where first shift conversion section 50 and evaporating section 30 are configured to exchange heat therebetween.

Evaporating section 30 and catalyst charging section 50A are formed so that the outer peripheral side of evaporating section 30 is adjacent to the inner peripheral side of catalyst charging section 50A. That is, evaporating section 30 and catalyst charging section 50A are arranged so as to contact with each other so that heat may be conducted therebetween. The contact portion between evaporating section 30 and catalyst charging section 50A may be bonded to each other by, for example, brazing. Accordingly, the heat exchange efficiency of evaporating section 30 and catalyst charging section 50A is improved.

In a case where the outer peripheral surface of evaporating section 30 is provided with an corrugated surface forming channel 31, the convex portion of the corrugated surface may contact catalyst charging section 50A. Further, the outer peripheral surface (which may not have an corrugated portion) of evaporating section 30 and the inner peripheral surface of catalyst charging section 50A may be formed in the same surface shape, so that both surfaces come into plane-contact with each other. Further, the outer peripheral surface of evaporating section 30 and the inner peripheral surface of catalyst charging section 50A may be integrally formed by a single member.

### (Heat conduction action of first shift conversion section)

Subsequently, the heat conduction action of first shift conversion section 50 will be described.

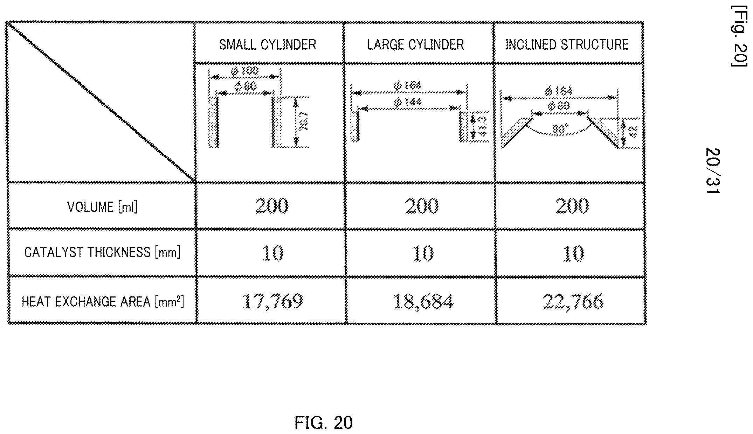

FIG. 20 is a graphic chart illustrating a relation between the shape of catalyst charging section 50A and the heat exchange area.

In first shift conversion section 50, heat is generated by the catalyst reaction of the hydrogen mixed gas. This heat is dispersed into the shift conversion catalyst through the gas, and is emitted to evaporating section 30 through the bonding portion.

In catalyst charging section 50A of first shift conversion section 50, the surface adjacent to evaporating section 30 is a funnel slope surface. For this reason, the area (called a heat exchange area) of the surface adjacent to evaporating section 30 increases compared to a case where the slope surface is not provided.

As illustrated in the graphic chart of FIG. 20, it is understood that the heat exchange area increases when the surface adjacent to evaporating section 30 is a slope surface as in Embodiment in a case where the volume and the thickness (the thickness from the inner peripheral surface) of catalyst charging section 50A are constant.

For example, in a case where the volume of catalyst charging section 50A is set to 200 ml and the thickness thereof is set to 10 mm, when the catalyst charging space is formed in a small cylindrical shape, the heat exchange area as the inner peripheral side surface of the catalyst charging space 50A becomes about 17.769 mm². Further, when the catalyst charging space is formed in a large cylindrical shape by the same condition, the heat exchange area becomes about 18.684 mm². Meanwhile, when the catalyst charging space is formed in a conical cylindrical shape (Embodiment) by the same condition, the heat exchange area increases in size so as to become 22.766 mm².

In this way, in the fuel processor of Embodiment, the area of the contact surface (the heat exchange surface) between first shift conversion section 50 and evaporating section 30 is large, and heat is emitted from first shift conversion section 50 to evaporating section 30 with high efficiency.

In addition, in catalyst charging section 50A of first shift conversion section 50, the gas flows from the funnel slope surface with a small opening diameter toward the funnel slope surface with a large opening diameter. That is, the gas channel cross-sectional area of catalyst charging section 50A at the downstream side is larger than that of the upstream side.

Generally, in a case where the gas passes through the catalyst charging section at a constant speed, the heat generation amount at the upstream side of catalyst charging section 50A is high because a large amount of an unreacted gas passes through the upstream side of catalyst charging section 50A. Meanwhile, the heat generation amount at the downstream side of catalyst charging section 50A is low because the ratio of the reacted gas at the downstream side of catalyst charging section 50A increases.

In the fuel processor of Embodiment 1, since the channel cross-sectional area of catalyst charging section 50A changes, the flow velocity of the gas at the upstream side of catalyst charging section 50A increases and the flow velocity of the gas at the downstream side thereof decreases. Thus, the heat which is generated at the upstream side of catalyst charging section 50A is rapidly dispersed toward the downstream side by the gas which flows at a high speed. Further, since the flow velocity of the gas at the downstream side of catalyst charging section 50A is low, the generated heat may not be easily dispersed. For these reasons, it is possible to further equalize the temperature distribution at the upstream side and the downstream side of catalyst charging section 50A.

As described above, according to the fuel processor of Embodiment, since evaporating section 30 and first shift conversion section 50 are disposed with the slope member interposed therebetween, the heat exchange therebetween may be efficiently performed without increasing the size of the apparatus.

In addition, according to the fuel processor of Embodiment, since the channel cross-sectional area of catalyst charging section 50A changes from the upstream side to the downstream side, the uniformity of the temperature distribution of catalyst charging section 50A is improved. Thus, it is possible to easily control catalyst charging section 50A of first shift conversion section 50 at a uniform temperature and an appropriate temperature without increasing the size of the apparatus.

Further, catalyst charging section 50A of first shift conversion section 50 is provided along the slope surface, and causes the gas to flow along the slope surface. Here, there is a concern that the catalyst charged in catalyst charging section 50A may be settled so that a gap is formed at the upper portion of the catalyst charging section. If the gas flows horizontally through the catalyst charging section, there is a concern that the gas may flow in the gap formed at the upper portion of the catalyst charging section, and the gas which does not contact the catalyst at all (which is not modified at all) may be supplied to the second shift conversion section. Meanwhile, in the fuel processor of Embodiment, the gas flows along the slope surface. For this reason, if the angle of the slope surface is appropriately set (for example, 15 degrees to 75 degrees with respect to the center axis of the spiral shape), even when the gap is formed at the upper portion of catalyst charging section 50A, the gas have to contact the catalyst. For this reason, only the gas which is shift converted by the catalyst may be supplied to the second shift conversion section.

### (Modified Example of catalyst charging section)

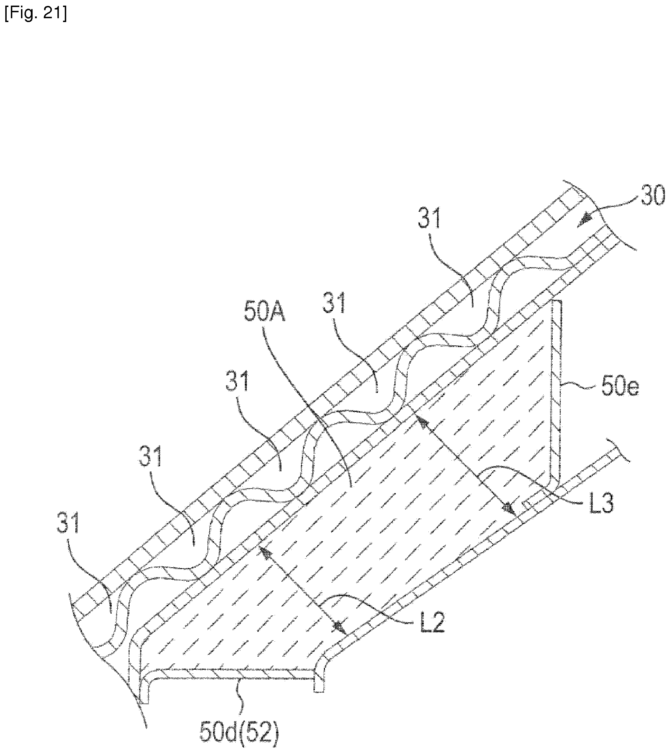

FIG. 21 is an exploded perspective view illustrating Modified Example of catalyst charging section 50A of the first shift conversion section.

Modified Example is an example in which the thickness (the thickness in a direction perpendicular to the slope surface) of catalyst charging section 50A is changed. Specifically, downstream thickness L3 is larger than upstream thickness L2 in the gas channel.

In this way, since downstream thickness L3 of catalyst charging section 50A is set to be larger, the flow velocity of the gas at the downstream side may be decreased. Thus, this configuration can be employed in a case where there is concern that the downstream temperature become lower than the upstream temperature in catalyst charging section 50A. Thereby it is possible to further equalize the temperature distribution at the upstream and downstream sides of catalyst charging section 50A.

In Embodiment 1, an example of a configuration has been described in which the catalyst reaction section is configured as the first shift conversion section and the heat conduction section is configured as the evaporating section. However, the catalyst reaction section may be configured as the selective oxidizing section or the like. Further, another configuration may be employed in which the heat conduction section is configured as a member through which a cooling medium flows.

Further, in Embodiment 1, an example of a configuration has been described in which the heat of the catalyst reaction section is dispersed to the heat conduction section. However, a configuration may be employed in which the heat of the heat conduction section is dispersed to the catalyst reaction section in a manner such that the catalyst reaction section is configured as the reforming section causing an endothermic reaction and the heat conduction section is configured as the partition wall of the combusting section.

Further, in Embodiment 1, first shift conversion section 50 is formed in an annular shape. However, for example, first shift conversion section 50 may be divided into a plurality of segments in the circumferential direction of the annular shape (the first shift conversion section may be divided into a plurality of segments by the division lines extending radially when viewed from the center of the annular shape in the plan view), and may be provided only at a part of the circumferential direction of the annular shape.

### (7) Others

In Embodiment 1, spiral channel 31 of evaporating section 30 is provided on the conical slope surface. However, the inclination angle of the slope surface provided with channel 31 may be changed halfway when the slope surface is constituted as the funnel slope surface of which the diameter gradually decreases. Further, the slope surface provided with spiral channel 31 may not be an axisymmetrical shape, and the cross-sectional surface may be an asymmetric shape such as an oval shape in the circumferential direction. Further, the diameter of the catalyst charging space of reforming section 40 may change in accordance with the height, and may be an asymmetric shape in the circumferential direction.

In Embodiment 1, an example of a configuration has been described in which evaporating section 30 exchanges heat with selective oxidizing section 70, first shift conversion section 50, and exhaust gas discharge path 12 of combusting section 10 while being disposed adjacent thereto. The member that exchanges heat with evaporating section 30 may be the other member.

Further, in Embodiment 1, an example of a configuration has been described in which the shift conversion section is provided as a double-stage structure including the first shift conversion section and the second shift conversion section and desulfurizing section 20 and ammonia decomposing section 65 are provided. However, the shift conversion section may be provided as a single-stage structure, and desulfurizing section 20 and ammonia decomposing section 65 may not be provided.

### 2. Embodiment 2

A fuel processor of Embodiment 2 includes (1) an inner cylinder, (2) a middle cylinder, (3) an outer cylinder, and (4) a combustion cylinder.

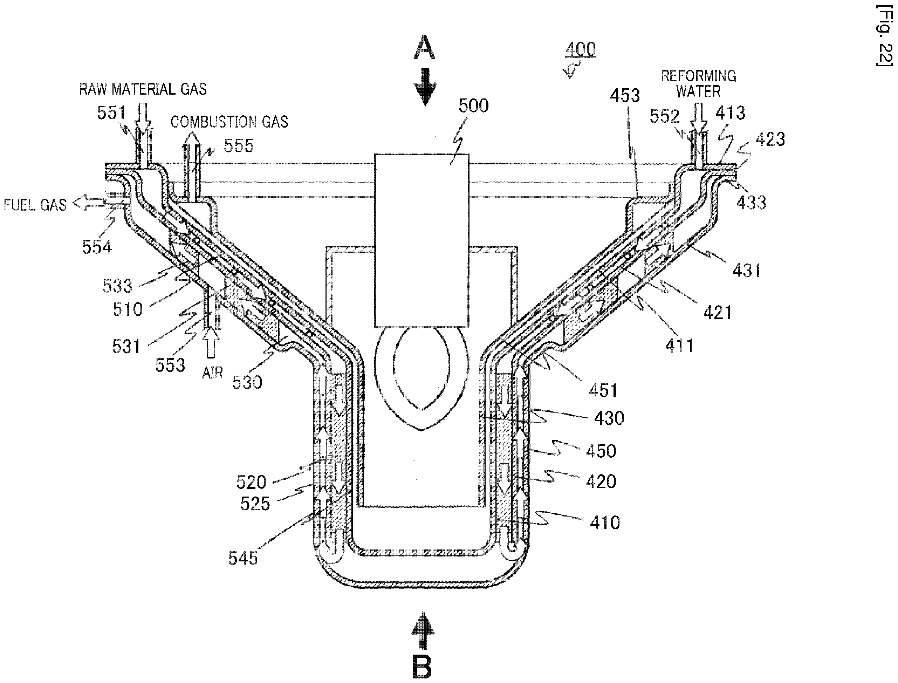

FIG. 22 is a longitudinal sectional view of the fuel processor of Embodiment 2. Fuel processor 400 of Embodiment 2 includes combusting section 500, evaporating section 510, reforming section 520, and shift conversion section 531 as functioning sections. In addition, selective oxidizing section 533 is provided as an option. Further, fuel processor 400 of Embodiment 2 includes inner cylinder 410, middle cylinder 420, outer cylinder 430, and combustion cylinder 450 as main constituting members as illustrated in FIG. 22.

### (1) Functions of respective sections

The functioning sections of the fuel processor of Embodiment 2 will be described by referring to FIG. 1. As described above, the fuel processor of the invention includes (1) evaporating section, (2) reforming section, (3) shift conversion section, and (4) heating section.

### (1-1) Evaporating section

A raw material gas including methane such as an urban gas or LPG and reforming water are supplied to evaporating section 510. Evaporating section 510 heats the reforming water so as to become water vapor, and mixes the raw material gas with the water vapor. Evaporating section 510 is provided between inclination portion A411 and inclination portion B421. It is desirable to form the evaporating section by a spiral channel so that the evaporation section whirls on the slope surface.

In order to arrange the spiral channel between inclination portion 411 and inclination portion 421, a spiral guide may be provided in a space between inclination portion 411 and inclination portion 421. As the spiral guide, for example, a spiral round rod may be interposed between inclination portion 411 and inclination portion 421 so as to adhere thereto. Alternatively, in order to form the spiral channel, the slope surface of inclination portion 411 or the slope surface of inclination portion 421 may be provided as a spiral corrugated surface so as to form a spiral channel (see Modified Examples 1 and 2).

In a case where inclination portion 411 and inclination portion 421 are pressure-bonded to each other so as to form a channel, there is no need to perform a pipe expanding process or a pipe contracting process. That is, inclination portion 411 and inclination portion 421 may be pressure-bonded to each other just by applying a load in the axial direction of the funnel slope surface while inclination portion 411 and inclination portion 421 overlap each other. The pipe expanding process or the pipe contracting process needs a large load and a large number of facilities. The fuel processor of Embodiment 1 may be easily manufactured without needing these facilities. For this reason, the fuel processor may be massively manufactured.

It is desirable to braze the adhering portions of the channel to inclination portion 411 and inclination portion 421. By brazing, inclination portion 411 and inclination portion 421 may further reliably adhere to the channel.

When the channel of evaporating section 510 is formed as a spiral channel, the channel length is lengthened. For this reason, the amount of time for which the raw material gas and the reforming water are treated in the channel of evaporating section 510 is lengthened. When the amount of time for which the raw material gas and the reforming water are treated in the channel of evaporating section 510 is lengthened, the reforming water may easily evaporate. Further, the evaporating reforming water (the water vapor) may be easily mixed with the raw material gas.

### (1-2) Reforming section

Reforming section 520 produces a hydrogen containing gas mainly containing hydrogen by a (water vapor) reforming reaction of a mixed gas of a raw material gas with water vapor produced by evaporating section 510. Reforming section 520 is constituted in a gap between lower inner cylinder portion 415 and lower middle cylinder portion 425. Further, the reforming reaction is an endothermic reaction. For this reason, it is desirable that reforming section 520 be disposed to surround lower inner cylinder portion 415 which is heated during the operation of the fuel processor. Since reforming section 520 surrounds lower inner cylinder portion 415, reforming section 520 may be easily heated, and hence the efficiency of the reforming reaction is improved.

Reforming section 520 includes a metallic reforming catalyst such as a Ni-based catalyst, a Ru-based catalyst, a Pt-based catalyst, or an Rh-based catalyst. The reforming catalyst causes a desirable reaction at, for example, about 600 degrees C.

### (1-3) Shift conversion section and selective oxidizing section

Shift conversion section 531 and selective oxidizing section 533 are provided between inclination portion B421 and inclination portion C431, and remove carbon monoxide from the reforming gas produced by reforming section 520. Reforming section 520 and shift conversion section 531 communicate with each other by reforming gas channel 525 arranged between lower outer cylinder portion 435 and lower middle cylinder portion 425. Further, air supply port 553 through which air is supplied to the reforming gas is provided between shift conversion section 531 and selective oxidizing section 533.

Shift conversion section 531 decreases the carbon monoxide concentration in the hydrogen containing gas to be about 0.5% by a CO shift conversion reaction using a CO shift conversion catalyst. Shift conversion section 531 contains a metallic CO shift conversion catalyst such as a Cu-based catalyst. The CO shift conversion catalyst causes a desirably reaction at, for example, 250 degrees C. Meanwhile, selective oxidizing section 533 further decreases the carbon monoxide concentration in the reforming gas to be about 10 ppm by a selective oxidization reaction using a CO selective oxidizing catalyst. Selective oxidizing section 533 contains a metallic selective oxidizing catalyst such as a Ru-based catalyst. The selective oxidizing catalyst causes a desirable reaction at, for example, 150 degrees C.

It is desirable to dispose shift conversion section 531 and selective oxidizing section 533 at a position adjacent to evaporating section 510. Specifically, it is desirable that evaporating section 510 face shift conversion section 531 and selective oxidizing section 533 with inclination portion 421 of middle cylinder 420 interposed therebetween. The shift conversion reaction and the selective oxidization reaction are exothermal reactions. For this reason, it is desirable that shift conversion section 531 and selective oxidizing section 533 surrounding evaporating section 510 may supply heat to evaporating section 510 while the fuel processor is operated.

### (1-4) Combusting section

Combusting section 500 includes, for example, a burner, and burns a combustible gas so as to generate heat energy for heating the periphery thereof. As the combustible gas, a methane gas such as an urban gas or LPG may be used or a remained gas (an off gas) containing hydrogen which is not consumed in a power generation stack may be used. By burning the off gas, energy may be used without any consumption, and hence the efficiency of the entire fuel cell system including the fuel processor is improved.

The heat which is generated by combusting section 500 is turned back at inner cylinder bottom portion 417 of inner cylinder 410 so as to be conducted through combustion gas channel 545 which is arranged between combustion cylinder 450 and inner cylinder 410. At this time, the heat is given to reforming section 520 so as to promote the reforming reaction. In addition, the heat is given to evaporating section 510, so that the reforming water becomes water vapor.

### (2) Description of respective constituting members

As described above, the fuel processor of Embodiment 2 includes (1) the inner cylinder, (2) the middle cylinder, (3) the outer cylinder, and (4) the combustion cylinder. In the description below, the respective constituting members will be described.

### (2-1) Inner cylinder

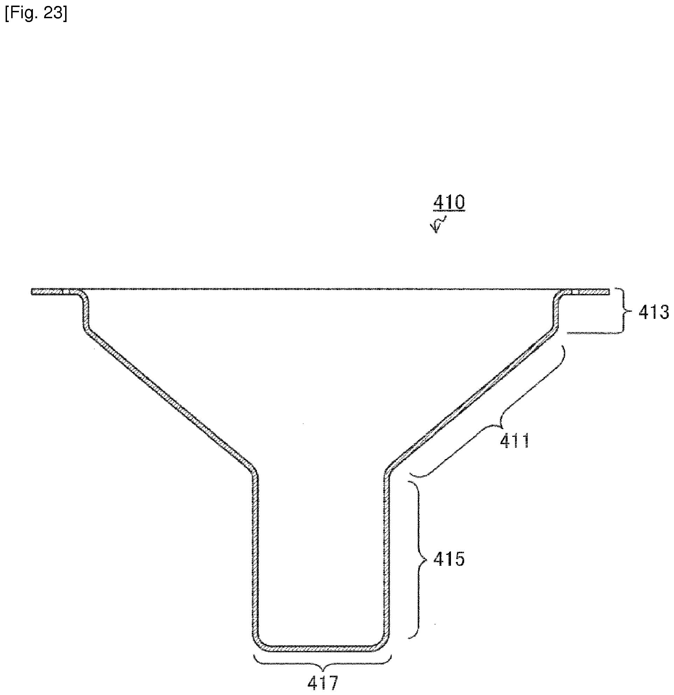

Inner cylinder 410 is a cylinder with a bottom. FIG. 23 is a longitudinal sectional view of only inner cylinder 410. Inner cylinder 410 includes inner cylinder bottom portion 417, lower inner cylinder portion 415, inclination portion A411, and flange-shaped inner cylinder portion 413. The sheet thickness of inner cylinder 410 is 0.8 to 1.5 mm.

Combustion cylinder 450 and heating section 500 configured as a burner or the like are disposed inside inner cylinder 410. Further, the inner surface of inner cylinder 410 constitutes combustion gas channel 545 through which the combustion gas heated by heating section 500 flows along with combustion cylinder 450 (see FIG. 22).

Lower inner cylinder portion 415 is a cylinder with a substantially constant diameter, and communicates with inclination portion A411. Further, inclination portion A411 communicates with flange-shaped inner cylinder portion 413 at one end (the ceiling side) thereof. Flange-shaped inner cylinder portion 413 includes, for example, an attachment portion with respect to the fuel cell system, reforming water supply port 552, or raw material gas supply port 551.

The angle of the slope surface of inclination portion A411 with respect to the center axis of inner cylinder 410 is desirably 15 degrees to 75 degrees, and is more desirably 40 degrees to 60 degrees. This is because molding is easily performed and evaporating section 510 (to be described later) is effectively operated.

Inner cylinder 410 of the fuel processor of Embodiment 2 corresponds to inner peripheral member 310 of the fuel processor of Embodiment 1.

### (2-2) Middle cylinder

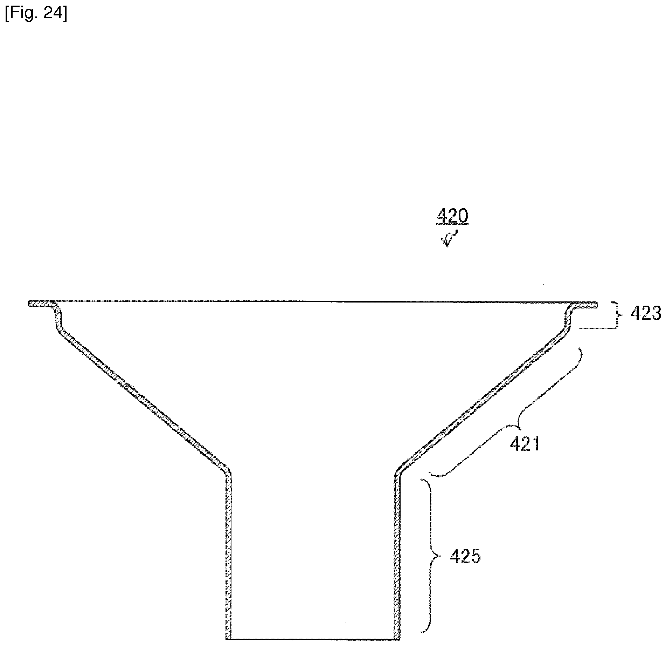

Middle cylinder 420 is a cylinder which surrounds inner cylinder 410. FIG. 24 is a longitudinal sectional view of only middle cylinder 420. In Embodiment, a configuration is illustrated in which middle cylinder 420 does not have a bottom, but the middle cylinder may have a bottom. The sheet thickness of middle cylinder 420 is 0.8 to 1.5 mm.

Middle cylinder 420 includes lower middle cylinder portion 425, inclination portion B421, and flange-shaped middle cylinder portion 423. Reforming section 520 is provided between lower middle cylinder portion 425 and lower inner cylinder portion 415. The inclination of inclination portion B421 is substantially equal to the inclination of inclination portion A411, and evaporating section 510 is provided in a conical hollow space therebetween.

Lower middle cylinder portion 425 is a cylinder with a substantially even diameter, and communicates with inclination portion B421. Further, inclination portion B421 communicates with flange-shaped middle cylinder portion 423 at the end (the ceiling side) thereof. Flange-shaped middle cylinder portion 423 includes, for example, an attachment portion with respect to the fuel cell system.

Middle cylinder 420 of the fuel processor of Embodiment 2 corresponds to outer peripheral member 320 of the fuel processor of Embodiment 1.

### (2-3) Outer cylinder

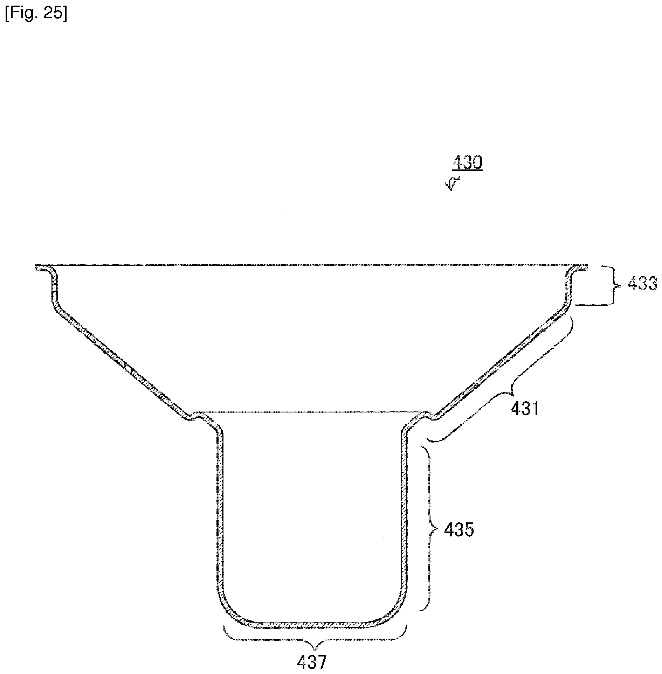

Outer cylinder 430 is a cylinder with a bottom which surrounds inner cylinder 410 and middle cylinder 420. FIG. 25 is a longitudinal sectional view of only outer cylinder 430. The sheet thickness of outer cylinder 430 is 0.8 to 1.5 mm.

Outer cylinder 430 includes at least outer cylinder bottom portion 437, lower outer cylinder portion 435, and inclination portion C431, and may also include flange-shaped outer cylinder portion 433. Reforming gas channel 525 is provided in a hollow cylindrical space between lower outer cylinder portion 435 and lower middle cylinder portion 425. Shift conversion section 531 and selective oxidizing section 533 are provided between inclination portion C431 and inclination portion B421.

Further, outer cylinder bottom portion 437 does not contact inner cylinder 410 and middle cylinder 420. A gap formed between outer cylinder bottom portion 437, and inner cylinder 410 and middle cylinder 420 serves as a gas turning back portion to be described later.

Lower outer cylinder portion 435 is a cylinder with a substantially even diameter, and communicates with inclination portion C431. Further, inclination portion C431 communicates with flange-shaped outer cylinder portion 433 at the end (the ceiling side) thereof. Flange-shaped outer cylinder portion 433 includes, for example, an attachment portion with respect to the fuel cell system or fuel gas discharge port 554.

Outer cylinder 430 of the fuel processor of Embodiment 2 corresponds to bottom plate 25b and a part of catalyst container 21A of desulfurizing unit 20A of the fuel processor of Embodiment 1.

### (2-4) Combustion cylinder

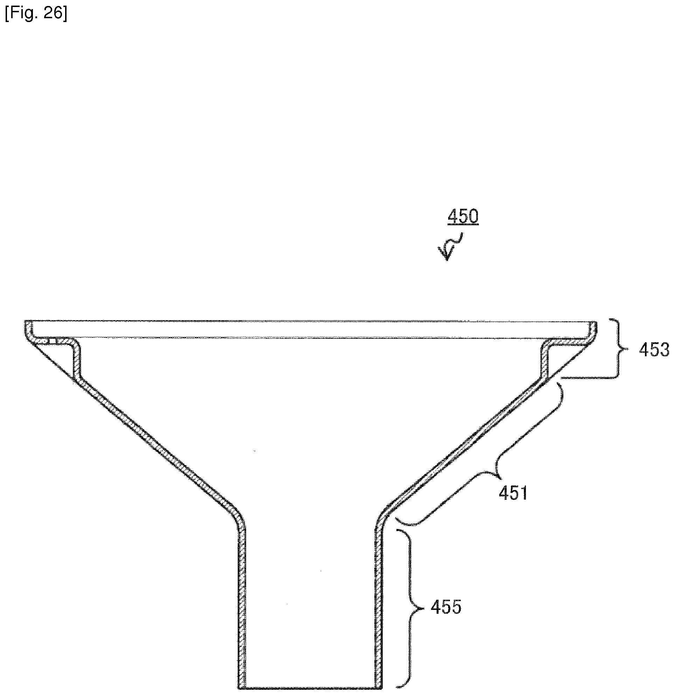

Combustion cylinder 450 is a cylinder which is surrounded by inner cylinder 410. FIG. 26 is a longitudinal sectional view of only combustion cylinder 450. In Embodiment, a configuration is illustrated in which combustion cylinder 450 does not have a bottom, but the combustion cylinder may have a bottom. The sheet thickness of combustion cylinder 450 is 0.8 to 1.5 mm.

Combustion cylinder 450 includes lower combustion cylinder portion 455, inclination portion D451, and flange-shaped combustion cylinder portion 453. Combustion gas channel 545 is provided in a hollow cylindrical space between lower combustion cylinder portion 455 and lower inner cylinder portion 415, and in a hollow conical space between inclination portion D451 and inclination portion A411.

Lower combustion cylinder portion 455 is a cylinder with a substantially even diameter, and communicates with inclination portion D451. Further, inclination portion D451 communicates with flange-shaped combustion cylinder portion 453 at one end (the ceiling side). Flange-shaped combustion cylinder portion 453 includes, for example, an attachment portion to the fuel cell system or combustion gas discharge port 555.

Combustion cylinder 450 of the fuel processor of Embodiment 2 is a member that constitutes combustion unit 10A of the fuel processor of Embodiment 1.

### (3) Flow of producing fuel gas

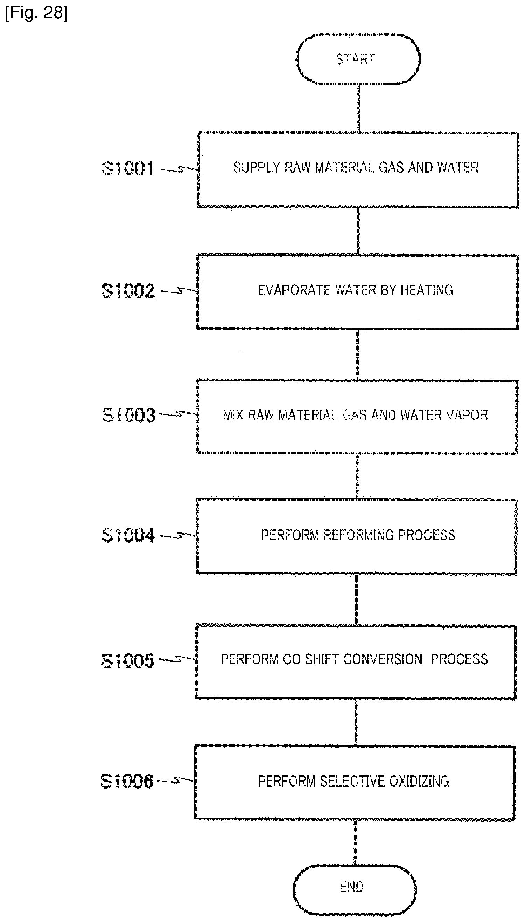

The flow of producing a fuel gas by the fuel processor of Embodiment 2 will be described by referring to FIG. 28. This flow may be also the same as that of the fuel processor of Embodiment 2.

First, a raw material gas and reforming water are supplied to evaporating section 510 (S1001). The raw material gas and the reforming water which are supplied to evaporating section 510 are heated by the heat from heating section 500 while flowing through evaporating section 510 (S1002). As a result, the reforming water evaporates so as to become water vapor, and the water vapor is mixed with the raw material gas (S1003). The heated mixture of the raw material gas and the water vapor flows into reforming section 520. The raw material gas and the water vapor is subjected to a reforming reaction by the catalyst action of the reforming catalyst, so that a hydrogen containing gas is produced (S1004).

The hydrogen containing gas which is produced by reforming section 520 is turned back by the gap among outer cylinder bottom portion 437, inner cylinder bottom portion 417, and lower middle cylinder portion 425 (see FIG. 1), and flows into reforming gas channel 525. Subsequently, the hydrogen containing gas flows into shift conversion section 531. In shift conversion section 531, carbon monoxide in the hydrogen containing gas is removed by a CO shift conversion reaction (S1005). The hydrogen containing gas from which carbon monoxide is removed by shift conversion section 531 is mixed with air containing oxygen supplied from air supply port 553, and flows into selective oxidizing section 533. In selective oxidizing section 533, carbon monoxide in the hydrogen containing gas and oxygen cause a reaction by the action of the CO selective oxidizing catalyst, so that carbon monoxide in the hydrogen containing gas is further removed (S1006). The hydrogen containing gas (the fuel gas) from which carbon monoxide is removed by selective oxidizing section 533 flows out of carbon monoxide removing section 530, thereby producing a fuel gas to be sent to the power generation stack.

In this way, the reforming water is supplied as a liquid water during the operation of the fuel processor, and becomes water vapor during the treatment. The reforming water exists as a liquid water around the flanges (413, 423, 433, and 453). Further, in a case where the off gas containing the water vapor is burned in the heating section, when the temperature of the combustion gas that passes through the combustion gas channel decreases, there is a concern that condensed water may be produced in the combustion gas channel. This condensed water may be easily produced in the combustion gas channel around the flanges. For this reason, the flange with a welded portion in the entire circumference may be easily corroded.

In order to suppress the corrosion of the flange, the sheet thickness of the flange may be increased, but thereby the amount of metal used increases. As a result, the thermal capacity of the fuel processor increases, and hence the loss in energy such as start-up energy increases.

In the fuel processor of Embodiment 2, at least inner cylinder 410 or middle cylinder 420 does not have a welded portion in the entire circumference of the flange. For example, the cylinder is integrally manufactured by press-drawing. For this reason, the durability of the fuel processor of Embodiment 2 with respect to the corrosion is improved. The configuration in which the welded portion is not provided in the entire circumference of the flange may be also applied to the fuel processor of Embodiment 1.

### (4) Method of manufacturing respective constituting members

Among the constituting members of the fuel processor of Embodiment 2, at least inner cylinder 410 or middle cylinder 420 does not have a welded portion in the entire circumference. In addition, it is desirable that outer cylinder 430 and combustion cylinder 450 also do not have the welded portion in the entire circumference. That is, it is desirable that inner cylinder 410, middle cylinder 420, outer cylinder 430, and combustion cylinder 450 do not have the welded portion in the entire circumference.

Here, the "welded portion in the entire circumference" indicates a portion which welds the connection portion between two members in the entire length. Accordingly, in a case of inner cylinder 410, the "welded portion in the entire circumference" indicates a seam between inner cylinder bottom portion 417 and lower inner cylinder portion 415, a seam between lower inner cylinder portion 415 and inclination portion A411, or a seam between inclination portion A411 and flange-shaped inner cylinder portion 413 (see FIG. 23).

In the description below, the manufacturing method will be described by exemplifying inner cylinder 410, but the same manufacturing method may be also applied to middle cylinder 420, outer cylinder 430, and combustion cylinder 450.

Inner cylinder 410 which does not have the welded portion in the entire circumference in the respective portions may be manufactured by cutting or press-drawing, but press-drawing is desirable from the viewpoint of cost. Specifically, it is desirable to integrally manufacture inner cylinder 410 by press-drawing one sheet metal (hereinafter, simply referred to as "integral manufacturing by press-drawing"). Here, the "press-drawing" is a kind of metal plastic working, and indicates a method of processing one sheet metal material into a vessel at one time by deforming. In this way, in the invention, the respective portions of inner cylinder 410 do not need to be bonded to each other by welding.

The thickness of the sheet metal which becomes the material of inner cylinder 410 manufactured by press-drawing is, for example, 0.8 to 1.5 mm. The thickness of the processed product by press-drawing becomes thinner than the thickness of the sheet metal as the material. When the thickness of the sheet metal is less than 0.8 mm, there is a concern that the thickness of inner cylinder 410 may be thinned too much. When the thickness of inner cylinder 410 is thin too much, the strength in a high-temperature state may not be ensured during the operation of the fuel processor, and hence may be broken.

Further, the material of the sheet metal is desirably stainless steel from the viewpoint of the high-temperature durability, the oxidation resistance, and the corrosion resistance. As described above, since the fuel processor is heated during the operation, when stainless steel with excellent high-temperature durability is used as the material of the sheet metal forming the cylinder, the durability of the fuel processor is improved.

Examples of the stainless steel include austenite stainless steel and ferrite stainless steel, and generally, austenite stainless steel which may be easily molded is used in many cases. Meanwhile, it is desirable to use low-cost ferrite stainless steel from the viewpoint of cost. In order to easily manufacture the inner cylinder by drawing, the inner cylinder of the fuel processor of Embodiment 2 is designed so that the ratio L/D between the axial length L and the radial length D of the cylinder decreases. For this reason, the molding may be performed without any problem even when the sheet metal of ferrite stainless steel is used as a material. Thus, the low-cost ferrite stainless steel may be used.

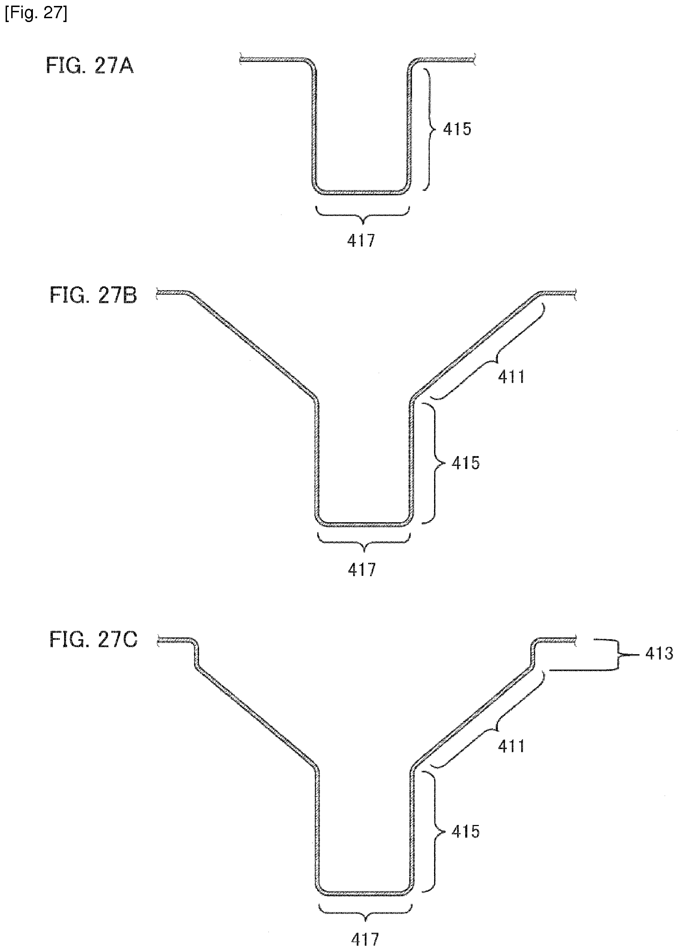

FIGS. 27A, 27B, and 27C illustrate a procedure of integrally manufacturing inner cylinder 410 by press-drawing. First, in FIG. 27A, one sheet metal is press-drawn so as to mold inner cylinder bottom portion 417 and lower inner cylinder portion 415. The drawing ratio at this time is about 0.5 in Embodiment, and the molding may be performed by one or two steps.

The "drawing ratio" indicates a dimension which is commonly used in press-drawing. Here, the drawing ratio indicates the ratio of the diameter of the processed cylinder with respect to the diameter of the non-processed sheet (blank). The lower limit of the drawing ratio is determined by the subject processing material, and the lower limit of the drawing ratio of the stainless steel becomes 0.5 to 0.55. When press-drawing is performed to a value smaller than these examples, the subject processing material may be broken. For this reason, press-drawing is performed by a plurality of divided processes. The ratio of the diameter of the processed cylinder with respect to the diameter of the non-processed cylinder after the second process is referred to as a "redrawing ratio". The lower limit of the redrawing ratio of the stainless steel is 0.8 to 0.85.

Further, the sheet thickness of the subject processing member essentially decreases in the press-drawing. In a case where plural drawing processes are performed, the sheet thickness decreases in every process. For this reason, it is required to estimate in advance a decrease in sheet thickness through a processing and to use an enough thick material for obtaining the necessary strength after the processing. Thus, the press-drawing becomes difficult and the cost increases as the ratio L/D between the axial length L and the radial length D increases.

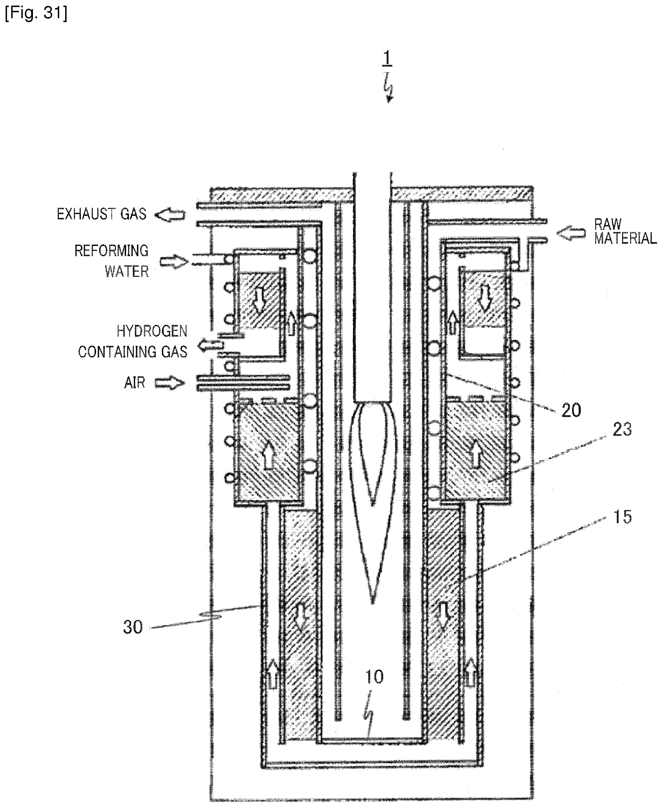

In the fuel processor of the related art, since the ratio L/D of the fuel processor is large, the ratio L/D of the constituting component also increases. As Comparative Example, the ratio L/D of middle cylinder 20 of fuel processor illustrated in FIG. 31 is about 2.5, and the ratio L/D of inner cylinder 10 is about 5. In a case where middle cylinder 20 is molded by press-drawing, the number of processes is substantially five processes or more. Then, in a case where inner cylinder 10 is molded by press-drawing, the number of processes is substantially eight processes or more. For this reason, many die faces are needed, and hence cost considerably increases compared to a case where a plurality of components are welded in the entire circumferences thereof. Further, a thick sheet needs to be used to decrease the sheet thickness. However, since the thermal capacity increases, the energy loss of the fuel processor increases.

Inner cylinder 410 and middle cylinder 420 of the fuel processor of Embodiment 2 are respectively provided with inclination portion A411 and inclination portion B421. For this reason, the ratio L/D of each of inner cylinder 410 and middle cylinder 420 decreases. As a result, the drawing ratio of the press-drawing decreases, and hence the processing may be easily performed.

Next, as illustrated in FIG. 27B, inclination portion A411 is molded. The angle of the slope surface with respect to the center axis of inner cylinder 410 at one side is desirably 15 degrees to 75 degrees and is more desirably 40 degrees to 60 degrees. Accordingly, the press-drawing may be performed with high precision.

Subsequently, as illustrated in FIG. 27C, flange-shaped inner cylinder portion 413 is molded. Finally, inner cylinder 410 illustrated in FIG. 23 is obtained by trimming or perforating the outer periphery. Flange-shaped inner cylinder portion 413 does not have an undercut which is formed by welding. As will be described later, since an assemble of inner cylinder 410 and middle cylinder 420 may be inserted into outer cylinder 430 upon assembling the fuel processor, it becomes possible to integrally-mold flange-shaped inner cylinder portion 413 with inclination portion 411.

In this way, since inner cylinder 410 of the fuel processor of Embodiment 2 includes inclination portion A411 and flange-shaped inner cylinder portion 413 does not have an undercut and does not cause any interference during the assembly, the inner cylinder may be integrally manufactured by press-drawing. Further, since the ratio L/D of inner cylinder 410 is small, inner cylinder 410 may be easily and highly precisely manufactured by a small number of processes.

In the fuel processor 400 of Embodiment 2, since the cylinder as the constituting member does not have the welded portion in the entire circumference, the durability against the corrosion is high and the lifetime of the product is long. Further, the durability against a change in temperature is high, and hence the lifetime of the product is long. Further, since the fuel processor may be manufactured by easy processing and the number of components may be decreased, the fuel processor may be manufactured at low cost by small effort.

### (5) Assembly of fuel processor

Next, a procedure of assembling the fuel processor of the invention will be described. First, inner cylinder 410 and middle cylinder 420 are assembled (overlapped). In order to form a spiral channel in evaporating section 510, for example, a spiral round rod is provided between inner cylinder 410 and middle cylinder 420.

The respective flange-shaped portions of inner cylinder 410 and middle cylinder 420 may be bonded to each other. Vacuum brazing is desirable as the bonding method. Further, the spiral channel which is arranged between inner cylinder 410 and middle cylinder 420 may be vacuum-brazed to inner cylinder 410 and middle cylinder 420.

Thus, the short-circuiting of the spiral channel may be prevented.

In a case where inner cylinder 410 and middle cylinder 420 are vacuum-brazed to each other, the pipe member for raw material gas supply port 551 and the pipe member for reforming water supply port 552 may be brazed at the same time. In addition, combustion cylinder 450 and inner cylinder 410 may be vacuum-brazed at the same time.

Further, the pipe for combustion gas discharge port 555 may be also vacuum-brazed at the same time. When many bonding positions are vacuum-brazed at the same time in this way, it is possible to decrease the number of the entire circumference welding positions or the manual welding positions. For this reason, the manufacturing load may be reduced. In addition, a variation in the shape caused by the thermal strain during the welding or a loss of the component caused by the awkward welding may be prevented. As a result, the fuel processor may be manufactured at the lower cost.

Next, a reforming catalyst is charged into a space which is formed between lower inner cylinder portion 415 and lower middle cylinder portion 425 so as to form reforming section 520. At this time, the reforming catalyst may be charged from the direction indicated by the arrow B (the bottom portion side) of FIG. 2.

Outer cylinder 430 provided with shift conversion section 531 and selective oxidizing section 533 is bonded to middle cylinder 420 at the entire circumference thereof by welding or the like, middle cylinder 420 constituting reforming section 520 with inner cylinder 410. The minimal diameter of shift conversion section 531 is larger than the maximum diameter of reforming section 520. For this reason, an assembly of inner cylinder 410 and middle cylinder 420 can be inserted into outer cylinder 430 from the direction indicated by the arrow B (the bottom portion side) of FIG. 22. As a result, selective oxidizing section 533 or shift conversion section 531 including a catalyst causing the exothermal reaction is disposed near evaporating section 510.

As in the fuel processor 1 of the related art (see FIG. 31), when the maximum diameter of reforming section 15 is larger than the maximal inner diameter of the shift conversion section 23, outer cylinder 30 may not be inserted to the bonded portion of inner cylinder 10 and middle cylinder 20 from the bottom portion side. For this reason, the assembly of inner cylinder 10 and middle cylinder 20 is inserted into outer cylinder 30 from the ceiling surface side. Subsequently, a flange-shaped portion (for example, a raw material injection port or a waste gas discharge port) needs to be assembled (see FIG. 31).

Inner cylinder 410 or middle cylinder 420 of the fuel processor of Embodiment 2 is integrally manufactured to the flange-shaped portion by press-drawing without the welding in the entire circumference of the flange-shaped portion. For this reason, the durability against the corrosion is high and the reliability is high.

Since the fuel processor of Embodiment 2 does not have the welded portion in the entire circumference at the high-temperature portion, the durability against an operation of repeating start-stop is high, and the reliability is high. Further, since the number of welded portions is small in the fuel processor of Embodiment 2, a variation caused by the thermal strain or a loss of the component caused by the awkward welding is small. For this reason, the fuel processor may be stably manufactured at the lower cost, and hence may be massively manufactured.

In addition, since the ratio L/D of each of inner cylinder 410, middle cylinder 420, outer cylinder 430, and combustion cylinder 450 is small, these members may be integrally manufactured by press-drawing. For this reason, there is no need to increase the sheet thickness of the sheet metal of the raw material. Thus, the material cost of the fuel processor decreases, the thermal capacity of the fuel processor is low, and the energy loss is small.

### (Modified Example 1 of Embodiment 2)

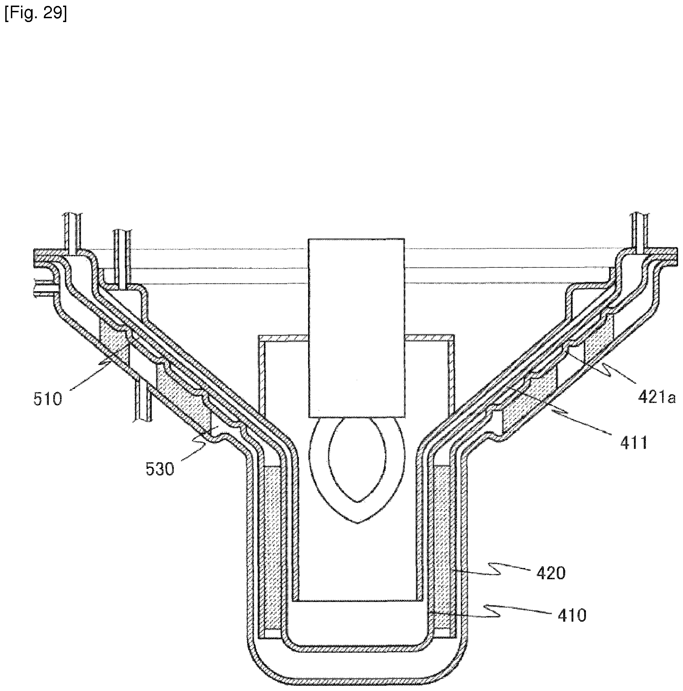

FIG. 29 is a longitudinal sectional view of Modified Example 1 of the fuel processor of Embodiment 2. In FIG. 29, the same constituents as those of FIGS. 22 to 27 are denoted by the same reference numerals, and the description thereof will not be repeated.

In the fuel processor of Modified Example 1 of Embodiment 2, inclination portion 421a of middle cylinder 420 is provided with a convex portion which extends in a spiral shape so as to form the channel of evaporating section 510. During the assembly of the fuel processor, the top surface of the convex portion of inclination portion 421a adheres to inclination portion 411 of inner cylinder 410. Accordingly, a spiral channel is formed so as to advance in a spiral shape on the slope surface.

At this time, since the top surface of the convex portion of inclination portion 421a adheres to inclination portion 411 of inner cylinder 410, a pipe expanding process or a pipe contracting process needs to be performed.

It is desirable to braze the adhering portion between the top surface of the convex portion of inclination portion 421a and inclination portion 411 of inner cylinder 410. By the brazing, the further reliable adhering may be realized.

When slope surface 421a is molded by press-drawing middle cylinder 420, an undercut caused by welding is not produced and the processing depth decreases. For this reason, the molding may be easily performed and a variation in the molding may be decreased.

It is desirable that the inclination angle of slope surface A411 be equal to the inclination angle of slope surface 421a (excluding the convex portion). It is desirable that the inclination angle with respect to the center axis be 15 degrees to 75 degrees. When the inclination angle is smaller than 15 degrees, there is a case in which slope surface A411 and slope surface 421a may not easily adhere to each other. When the inclination angle is larger than 75 degrees, the reforming water may not easily flow through the channel of evaporating section 510 by the gravity. More desirably, when the inclination angle with respect to the center axis is set to 40 degrees to 60 degrees, the molding may be more easily performed and the reforming water may efficiently flow in evaporating section 510.

By employing such a configuration, the spiral round rod illustrated in Embodiment 1 does not need to be used, and hence the number of components may be decreased. Further, the position of the spiral channel may be hard to deviate from the designed position during the assembly, and hence the difference therebetween is small. In addition, the contact area between evaporating section 510 and shift conversion section 531 or selective oxidizing section 533 may be increased. For this reason, the heat which is generated by the shift conversion reaction or the selective oxidization reaction may be efficiently transferred to evaporating section 510. Further, the catalyst may be easily maintained at an appropriate temperature.

### (Modified Example 2 of Embodiment 2)

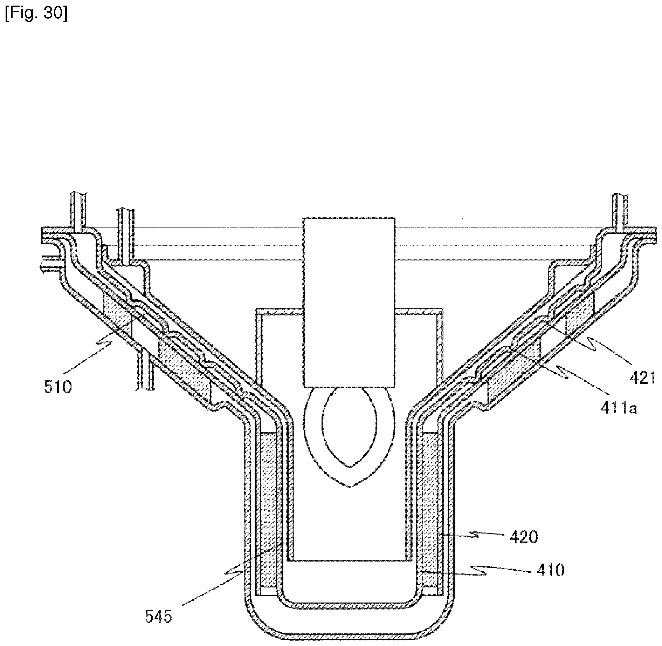

FIG. 30 is a longitudinal sectional view of Modified Example 2 of the fuel processor of Embodiment 2. In FIG. 30, the same constituents as those of FIGS. 22 to 27 are denoted by the same reference numerals, and the description thereof will not be repeated. In addition, the description of the common configuration as that of Modified Example 1 of Embodiment 2 will not be repeated.

In the fuel processor of Modified Example 2 of Embodiment 2, a convex portion which extends in a spiral shape is formed in inclination portion 411a of inner cylinder 410 so as to form the channel of evaporating section 510. During the assembly of the fuel processor, the top surface of the convex portion of inclination portion A411a adheres to inclination portion 421 of middle cylinder 420. Accordingly, a spiral channel is formed so as to advance in a spiral shape on the slope surface.

By employing such a configuration, the spiral round rod illustrated in Embodiment 2 does not need to be used, and hence the number of components may be decreased. Further, the position of the spiral channel may be hard to deviate from the designed position during the assembly, and hence the difference therebetween is small. In addition, the contact area between combustion gas channel 545 and evaporating section 510 may be increased. For this reason, the heat of the combustion gas may be sufficiently transferred to evaporating section 510. As a result, the heat emission toward the outside of the system may be suppressed, and hence the efficiency of the fuel cell system is improved.

### Industrial Applicability

The invention may be applied to a fuel processor which is used in a fuel cell system and supplies a hydrogen gas to a power generation stack.

### Reference Signs List

- 10: Combusting section
- 30: Evaporating section
- 31: Channel
- 40: Reforming section
- 50: First shift conversion section
- 60: Second shift conversion section
- 70: Selective oxidizing section
- 90: Reforming water tank
- 302: Lower cover (corresponding to cover blocking input port)
- 310: Inner peripheral member (corresponding to first member)
- 311, 311A to 311D, 321, 321A to 321D: Inclination portion
- 312: Inner cylinder portion
- 320: Outer peripheral member (corresponding to second member)
- 322: Outer cylinder portion
- V1 to V5: Recessed groove
- 1, 400: Fuel processor
- 10, 110, 410: Inner cylinder
- 411: Inclination portion A
- 411a: Inclination portion A' (with spiral channel)
- 413: Flange-shaped inner cylinder portion
- 415: Lower inner cylinder portion
- 417: Inner cylinder bottom portion
- 20, 120, 420: Middle cylinder
- 421: Inclination portion B
- 421a: Inclination portion B' (with spiral channel)
- 423: Flange-shaped middle cylinder portion
- 425: Lower middle cylinder portion
- 30, 130, 430: Outer cylinder
- 431: Inclination portion C
- 433: Flange-shaped outer cylinder portion
- 435: Lower outer cylinder portion
- 437: Outer cylinder bottom portion
- 150, 450: Combustion cylinder
- 451: Inclination portion D
- 453: Flange-shaped combustion cylinder portion
- 455: Lower combustion cylinder portion
- 115, 500: Heating section
- 210, 510: Evaporating section
- 15, 520: Reforming section
- 525: Reforming gas channel
- 530: Carbon monoxide removing section
- 23, 531: shift conversion section
- 533: Selective oxidizing section
- 117, 545: Combustion gas channel
- 551: Raw material gas supply port
- 552: Reforming water supply port
- 553: Air supply port
- 554: Fuel gas discharge port
- 555: Combustion gas discharge port

## Claims

1. A fuel processor comprising:
an evaporating section (30) which evaporates reforming water so as to mix a raw material gas with water vapor;
a reforming section (40) which causes the raw material gas mixed with the water vapor to pass through a reforming catalyst so as to produce a hydrogen mixed gas;
a shift conversion section (50) which causes the hydrogen mixed gas to pass through a shift conversion catalyst so as to remove carbon monoxide therefrom; and
a combusting section (10) which supplies heat to the reforming section (40),
wherein the evaporating section (30) includes a spiral channel (31) which extends on a funnel slope surface and the reforming water and the raw material gas flowing through the heated channel (31) are mixed with each other.

2. The fuel processor according to claim 1, wherein:
the evaporating section (30) includes a first member (310) that covers one surface of the funnel slope surface and a second member (320) that covers the other surface of the slope surface so as to concentrically overlap the first member (310); and
the channel (31) is constituted by a gap between the first member (310) and the second member (320).

3. The fuel processor according to claim 2, wherein:
the first member (310) includes a slope surface which is inclined in a funnel shape;
the second member (320) includes an corrugated surface provided with a recessed groove (V1) extending in a spiral shape; and
the channel (31) is constituted by a space surrounded by the slope surface and the recessed groove (V1).

4. The fuel processor according to claim 2, wherein the second member (320) overlaps the lower side of the first member (310) in the gravity direction.

5. The fuel processor according to claim 3, wherein a recessed groove (V3) is disposed so that both ends of the recessed groove are higher than the center of the recessed groove (V3) in the gravity direction in a cross-section perpendicular to the extension direction of the recessed groove (V3).

6. The fuel processor according to claim 2, wherein:
the first member (310) includes a first corrugated surface which is provided at the side facing the second member (320) and has a first recessed groove (V4) extending in a spiral shape;
the second member (320) includes a second corrugated surface which is provided at the side facing the first member (310) and has a second recessed groove (V5) extending in a spiral shape; and
the channel (31) is constituted by a space which is surrounded by the first recessed groove (V4) and the second recessed groove (V5).

7. The fuel processor according to claim 1, wherein the funnel slope surface has an inclination angle of 15 degrees to 75 degrees with respect to the spiral center axis of the spiral channel (31).

8. The fuel processor according to claim 2, wherein:
the reforming section (40) includes an inner cylinder (312), an outer cylinder (322) which are concentrically disposed, and a reforming catalyst storage space which is arranged between the inner cylinder (312) and the outer cylinder (322); and
the inner cylinder (312) is integrated with the first member (310) and the outer cylinder (322) is integrated with the second member (320).

9. The fuel processor according to claim 8, wherein:
the reforming section (40) includes an input port (h1) for the reforming catalyst which is provided at one end side of the storage space and a cover (302) which is bonded to the input port (h1) so as to cover the input port (h1);
the first member (310) and the second member (320) are bonded to each other at the outer peripheral portion of the funnel slope surface; and
the input port (h1) and the cover (302) are disposed at the opposite side to the evaporating section (30) in the reforming section (40).

10. The fuel processor according to claim 1, further comprising a supply tank (90) for the reforming water which is provided in a surrounded region of the funnel slope surface in the evaporating section (30).

11. The fuel processor according to claim 1, further comprising a heat conduction section (30) which is provided along the slope surface, and a catalyst reaction section (50) which is disposed so as to face the heat conduction section (30) with the slope surface interposed therebetween, the catalyst reaction being configured to exchanges heat with the heat conduction section (30), wherein:
the catalyst reaction section (50) is filled with a catalyst and is formed so that a gas to be treated flows therethrough; and
a downstream channel of the catalyst reaction section (50) has larger a cross-sectional area than a cross-sectional area of an upstream channel of the catalyst reaction section (50).

12. The fuel processor according to claim 11, wherein:
the catalyst reaction section (50) and the heat conduction section (30) are formed in an annular shape along the funnel slope surface of which the opening diameter changes as it goes to the gravity direction; and
the fluid flows through the catalyst reaction section (50) along the slope surface in a direction in which the opening diameter changes.

13. The fuel processor according to claim 12, wherein a catalyst charging space of the catalyst reaction section (50) is constituted so that the thickness in a direction perpendicular to the slope surface is even.

14. The fuel processor according to claim 12, wherein a catalyst charging space of the catalyst reaction section (50) is constituted so that a thickness of the catalyst charging space in a direction perpendicular to the slope surface is thicker at the large opening diameter side of the funnel slope surface than that of the catalyst charging space at the small opening diameter side.

15. The fuel processor according to claim 12, wherein:
the catalyst reaction section (50) is provided with an input port (53) through which the catalyst is input, and a cover (52) which is bonded to the input port (53) so as to cover the input port (53); and
the input port (53) and the cover (52) are disposed at the lower side of the catalyst reaction section in the gravity direction.

16. The fuel processor according to claim 15, wherein the cover (52) divides the catalyst charging space into a plurality segments each extending radially.

## Patentansprüche

1. Kraftstoffverarbeitungsvorrichtung, die Folgendes umfasst:
einen Verdampfungsabschnitt (30), der Reformierungswasser verdampft, um ein Rohmaterialgas mit Wasserdampf zu mischen;
einen Reformierungsabschnitt (40), der das mit dem Wasserdampf vermischte Rohmaterialgas veranlasst, einen Reformierungskatalysator zu durchlaufen, um ein Wasserstoffmischgas zu erzeugen;
einen Shift-Konvertierungsabschnitt (50), der das Wasserstoffmischgas veranlasst, einen Shift-Konvertierungskatalysator zu durchlaufen, um Kohlenstoffmonoxid daraus zu entfernen; und
einen Verbrennungsabschnitt (10), der dem Reformierungsabschnitt (40) Wärme zuführt,
wobei der Verdampfungsabschnitt (30) einen Wendelkanal (31) enthält, der sich auf einer Trichterneigungsoberfläche erstreckt, und das Reformierungswasser und das Rohmaterialgas, die durch den erwärmten Kanal (31) strömen, miteinander vermischt werden.

2. Kraftstoffverarbeitungvorrichtung nach Anspruch 1, wobei:
der Verdampfungsabschnitt (30) ein erstes Element (310), das eine Oberfläche der Trichterneigungsoberfläche bedeckt, und ein zweites Element (320) enthält, das die andere Oberfläche der Neigungsoberfläche bedeckt, so dass es das erste Element (310) konzentrisch überlappt; und
der Kanal (31) durch einen Spalt zwischen dem ersten Element (310) und dem zweiten Element (320) gebildet wird.

3. Kraftstoffverarbeitungsvorrichtung nach Anspruch 2, wobei:
das erste Element (310) eine Neigungsoberfläche enthält, die in einer Trichterform geneigt ist;
das zweite Element (320) eine gewellte Oberfläche enthält, die mit einer vertieften Rille (V1) versehen ist, die sich wendelförmig erstreckt; und
der Kanal (31) durch einen Raum gebildet ist, der von der Neigungsoberfläche und der vertieften Rille (V1) umgeben ist.

4. Kraftstoffverarbeitungsvorrichtung nach Anspruch 2, wobei das zweite Element (320) die untere Seite des ersten Elements (310) in Schwerkraftrichtung überlappt.

5. Kraftstoffverarbeitungsvorrichtung nach Anspruch 3, wobei eine vertiefte Rille (V3) derart angeordnet ist, dass in einem Querschnitt senkrecht zu der Ausbreitungsrichtung der vertieften Rille (V3) beide Enden der vertieften Rille in Schwerkraftrichtung höher als der Mittelpunkt der vertieften Rille (V3) sind.

6. Kraftstoffverarbeitungsvorrichtung nach Anspruch 2, wobei:
das erste Element (310) eine erste gewellte Oberfläche enthält, die an der Seite vorgesehen ist, die dem zweiten Element (320) gegenüberliegt, und eine erste vertiefte Rille (V4) aufweist, die sich wendelförmig erstreckt;
das zweite Element (320) eine zweite gewellte Oberfläche enthält, die an der Seite vorgesehen ist, die dem ersten Element (310) gegenüberliegt, und eine zweite vertiefte Rille (V5) aufweist, die sich wendelförmig erstreckt; und
der Kanal (31) durch einen Raum gebildet wird, der von der ersten vertieften Rille (V4) und der zweiten vertieften Rille (V5) umgeben ist.

7. Kraftstoffverarbeitungsvorrichtung nach Anspruch 1, wobei die Trichterneigungsoberfläche einen Neigungswinkel von 15 Grad bis 75 Grad bezüglich der Wendelmittelachse des Wendelkanals (31) aufweist.

8. Kraftstoffverarbeitungsvorrichtung nach Anspruch 2, wobei:
der Reformierungsabschnitt (40) einen inneren Zylinder (312), einen äußeren Zylinder (322), die konzentrisch angeordnet sind, und einen Reformierungskatalysatorspeicherraum enthält, der zwischen dem inneren Zylinder (312) und dem äußeren Zylinder (322) angeordnet ist; und
der innere Zylinder (312) in das erste Element (310) integriert ist und der äußere Zylinder (322) in das zweite Element (320) integriert ist.

9. Kraftstoffverarbeitungsvorrichtung nach Anspruch 8, wobei:
der Reformierungsabschnitt (40) einen Eingangsanschluss (h1) für den Reformierungskatalysator, der an einer Stirnseite des Speicherraums vorgesehen ist, und eine Abdeckung (302) enthält, die mit dem Eingangsanschluss (h1) verbunden ist, um den Eingangsanschluss (h1) zu bedecken;
das erste Element (310) und das zweite Element (320) an dem äußeren Umfangsabschnitt der Trichterneigungsoberfläche miteinander verbunden sind; und
der Eingangsanschluss (h1) und die Abdeckung (302) an der dem Verdampfungsabschnitt (30) gegenüberliegenden Seite in dem Reformierungsabschnitt (40) angeordnet sind.

10. Kraftstoffverarbeitungsvorrichtung nach Anspruch 1, der ferner einen Vorratstank (90) für das Reformierungswasser enthält, der in einer von der Trichterneigungsoberfläche umgebenen Bereich in dem Verdampfungsabschnitt (30) vorgesehen ist.

11. Kraftstoffverarbeitungsvorrichtung nach Anspruch 1, der ferner einen Wärmeleitungsabschnitt (30), der entlang der Neigungsoberfläche vorgesehen ist, und Katalysatorreaktionsabschnitt (50) umfasst, der derart angeordnet ist, dass er dem Wärmeleitungsabschnitt (30) gegenüberliegt, wobei die Neigungsoberfläche dazwischen angeordnet ist, wobei die Katalysatorreaktion konfiguriert ist, Wärme mit dem Wärmeleitungsabschnitt (30) zu tauschen, wobei:
der Katalysatorreaktionsabschnitt (50) mit einem Katalysator gefüllt ist und derart geformt ist, dass ein zu behandelndes Gas durchströmt; und
ein Abwärtskanal des Katalysatorreaktionsabschnitts (50) eine größere Querschnittsfläche aufweist als eine Querschnittsfläche eines Aufwärtskanals des Katalysatorreaktionsabschnitts (50).

12. Kraftstoffverarbeitungsvorrichtung nach Anspruch 11, wobei:
der Katalysatorreaktionsabschnitt (50) und der Wärmeleitungsabschnitt (30) ringförmig entlang der Trichterneigungsfläche gebildet sind, deren Öffnungsdurchmesser sich in Schwerkraftrichtung verändert; und
das Fluid in einer Richtung, in der sich der Öffnungsdurchmesser verändert, entlang der Neigungsoberfläche durch den Katalysatorreaktionsabschnitt (50) strömt.

13. Kraftstoffverarbeitungsvorrichtung nach Anspruch 12, wobei ein Katalysatorladeraum des Katalysatorreaktionsabschnitts (50) derart gebildet ist, dass die Dicke in einer zu der Neigungsoberfläche senkrechten Richtung gleichmäßig ist.

14. Kraftstoffverarbeitungsvorrichtung nach Anspruch 12, wobei ein Katalysatorladeraum des Katalysatorreaktionsabschnitts (50) derart gebildet ist, dass die Dicke in einer zu der Neigungsoberfläche senkrechten Richtung auf der Seite der Trichterneigungsoberfläche mit dem großen Öffnungsdurchmesser dicker ist als die des Katalysatorladeraums auf der Seite des kleinen Öffnungsdurchmessers.

15. Kraftstoffverarbeitungsvorrichtung nach Anspruch 12, wobei:
der Katalysatorreaktionsabschnitt (50) mit einem Eingangsanschluss (53), durch den der Katalysator eingegeben wird, und einer Abdeckung (52) versehen ist, die mit dem Eingangsanschluss (53) verbunden ist, um den Eingangsanschluss (53) zu bedecken; und
der Eingangsanschluss (53) und die Abdeckung (52) in Schwerkraftrichtung an der unteren Seite des Katalysatorreaktionsabschnitts angeordnet sind.

16. Kraftstoffverarbeitungsvorrichtung nach Anspruch 15, wobei die Abdeckung (52) den Katalysatorladeraum in mehrere Segmente, die sich jeweils radial erstrecken, unterteilt.

## Revendications

1. Transformateur de carburant comprenant :
une section d'évaporation (30) qui assure l'évaporation d'eau de reformage afin de mélanger une matière première gazeuse avec de la vapeur d'eau ;
une section de reformage (40) qui amène la matière première gazeuse mélangée à la vapeur d'eau à traverser un catalyseur de reformage afin de produire un mélange gazeux contenant de l'hydrogène ;
une section de conversion catalytique (50) qui amène le mélange gazeux contenant de l'hydrogène à passer à travers un catalyseur de conversion afin d'éliminer le monoxyde de carbone qu'il contient ; et
une section de combustion (10) qui alimente en chaleur la section de reformage (40),
où la section d'évaporation (30) inclut un canal en spirale (31) qui se prolonge sur la surface inclinée d'un entonnoir et l'eau de reformage et la matière première gazeuse s'écoulant à travers le canal (31) chauffé sont mélangées l'une avec l'autre.

2. Transformateur de carburant selon la revendication 1, où :
la section d'évaporation (30) inclut un premier élément (310) qui recouvre une surface de la surface inclinée de l'entonnoir et un second élément (320) qui recouvre l'autre surface de la surface inclinée de telle manière qu'il se superpose de manière concentrique au premier élément (310) ; et
le canal (31) est constitué d'un espace entre le premier élément (310) et le second élément (320).

3. Transformateur de carburant selon la revendication 2, où :
le premier élément (310) inclut une surface inclinée qui est inclinée selon une forme d'entonnoir ;
le second élément (320) inclut une surface ondulée pourvue d'une gorge évidée (V1) s'étendant selon une forme de spirale ; et
le canal (31) est constitué d'un espace entouré par la surface inclinée et la gorge évidée (V1).

4. Transformateur de carburant selon la revendication 2, où le second élément (320) se superpose à la surface inférieure du premier élément (310) dans la direction de la gravité.

5. Transformateur de carburant selon la revendication 3, où une gorge évidée (V3) est disposée de manière à ce que les deux extrémités de la gorge évidée soient plus élevées que le centre de la gorge évidée (V3) dans la direction de la gravité dans une coupe transversale perpendiculaire à la direction d'extension de la gorge évidée (V3).

6. Transformateur de carburant selon la revendication 2, où
le premier élément (310) inclut une première surface ondulée qui est prévue sur le côté faisant face au second élément (320) et comporte une première gorge évidée (V4) s'étendant selon une forme de spirale ;
le second élément (320) inclut une seconde surface ondulée qui est prévue sur le côté faisant face au premier élément (310) et comporte une seconde gorge évidée (V5) s'étendant selon une forme de spirale ; et
le canal (31) est constitué d'un espace entouré par la première gorge évidée (V4) et la seconde gorge évidée (V5).

7. Transformateur de carburant selon la revendication 1, où la surface inclinée de l'entonnoir présente un angle d'inclinaison de 15 degrés à 75 degrés par rapport à l'axe central de la spirale du canal en spirale (31).

8. Transformateur de carburant selon la revendication 2, où :
la section de reformage (40) inclut un cylindre interne (312), un cylindre externe (322) qui sont disposés de manière concentrique, et un espace de stockage d'un catalyseur de reformage qui est agencé entre le cylindre interne (312) et le cylindre externe (322) ; et
le cylindre interne (312) est intégré au premier élément (310) et le cylindre externe (322) est intégré au second élément (320).

9. Transformateur de carburant selon la revendication 8, où :
la section de reformage (40) inclut un port d'entrée (h1) pour le catalyseur de reformage qui est prévu à un côté d'extrémité de l'espace de stockage et un couvercle (302) qui est lié au port d'entrée (h) de manière à recouvrir le port d'entrée (h1) ;
le premier élément (310) et le second élément (320) sont liés l'un à l'autre au niveau de la partie périphérique externe de la surface inclinée de l'entonnoir ; et
le port d'entrée (h1) et le couvercle (302) sont disposés au niveau du côté opposé de la section d'évaporation (30) dans la section de reformage (40).

10. Transformateur de carburant selon la revendication 1, comprenant en outre un réservoir d'approvisionnement (90) pour l'eau de reformage qui est prévu dans une région entourée de la surface inclinée de l'entonnoir dans la section d'évaporation (30).

11. Transformateur de carburant selon la revendication 1, comprenant en outre une section de conduction de chaleur (30) qui est prévue le long de la surface inclinée, et une section de réaction catalytique (50) qui est disposée de manière à faire face à la section de conduction de chaleur (30), la surface inclinée étant interposée entre celles-ci, la réaction catalytique étant configurée pour échanger de la chaleur avec la section de conduction de chaleur (30), où :
la section de réaction catalytique (50) est remplie avec un catalyseur et est formée de manière à ce qu'un gaz à traiter la traverse ; et
un canal aval de la section de réaction catalytique (50) comporte une section transversale plus grande qu'une section transversale d'un canal amont de la section de réaction catalytique (50).

12. Transformateur de carburant selon la revendication 11, où :
la section de réaction catalytique (50) et la section de conduction de chaleur (30) sont formées selon une forme d'anneau le long de la surface inclinée de l'entonnoir, dont le diamètre d'ouverture change en suivant la direction de la gravité ; et
le fluide circule à travers la section de réaction catalytique (50) le long de la surface inclinée dans une direction dans laquelle le diamètre d'ouverture change.

13. Transformateur de carburant selon la revendication 12, où un espace de charge du catalyseur de la section de réaction catalytique (50) est constitué de manière à ce que l'épaisseur dans une direction perpendiculaire à la surface inclinée est uniforme.

14. Transformateur de carburant selon la revendication 12, où un espace de charge du catalyseur de la section de réaction catalytique (50) est constitué de manière à ce qu'une épaisseur de l'espace de charge du catalyseur dans une direction perpendiculaire à la surface inclinée est plus épaisse du côté du grand diamètre d'ouverture de la surface inclinée de l'entonnoir que celle de l'espace de charge du catalyseur du côté du petit diamètre d'ouverture.

15. Transformateur de carburant selon la revendication 12, où :
la section de réaction catalytique (50) est pourvue d'un port d'entrée (53) à travers lequel le catalyseur est introduit, et un couvercle (52) qui est lié au port d'entrée (53) de manière à recouvrir le port d'entrée (53) ; et
le port d'entrée (53) et le couvercle (52) sont disposés au niveau du côté inférieur de la section de réaction catalytique dans la direction de la gravité.

16. Transformateur de carburant selon la revendication 15, où le couvercle (52) divise l'espace de charge du catalyseur en une pluralité de segments s'étendant chacun radialement.
